(19) Europäisches Patentamt
European Patent Office
Office européen des brevets

(11) EP 1 754 752 A1

(12) EUROPEAN PATENT APPLICATION
published in accordance with Art. 158(3) EPC

(43) Date of publication:
21.02.2007 Bulletin 2007/08

(21) Application number: 05734442.6

(22) Date of filing: 22.04.2005

(51) Int Cl.:
*C08L 33/00* (2006.01) *C08F 8/48* (2006.01)
*C08J 5/18* (2006.01)

(86) International application number:
PCT/JP2005/007671

(87) International publication number:
WO 2005/105918 (10.11.2005 Gazette 2005/45)

(84) Designated Contracting States:
AT BE BG CH CY CZ DE DK EE ES FI FR GB GR HU IE IS IT LI LT LU MC NL PL PT RO SE SI SK TR

(30) Priority: 28.04.2004 JP 2004133425

(71) Applicant: TORAY INDUSTRIES, INC.
Tokyo 103-8666 (JP)

(72) Inventors:
- MAEKAWA, Shigetoshi
Suginami-ku, Tokyo 1670022 (JP)
- MORIYAMA, Hideki
Otsu-shi, Shiga 5200842 (JP)
- HORIUCHI, Mitsuhiro;
Kyoto-shi, Kyoto 6078088; (JP)
- TSUKUDA, Akimitsu
Otsu-shi, Shiga 5202153 (JP)

(74) Representative: Kador & Partner
Corneliusstrasse 15
80469 München (DE)

# (54) ACRYLIC RESIN FILMS AND PROCESS FOR PRODUCING THE SAME

(57) [Problem to be solved]

In view of the situation where an acrylic resin film excellent in all of transparency, weather resistance, heat resistance and toughness has not been present, this invention provides a novel and industrially useful acrylic resin film with such properties.

This invention also provides an acrylic resin film in which, for example, a hard coat layer is formed at least on one surface of said acrylic resin film, while a reflection preventive film is further formed on at least one surface of said film, and also provides an optical filter comprising said film.

[Means for solving the problem]

An acrylic resin film, in which acrylic elastic particles are mixed with an acrylic resin containing glutaric anhydride units, has a total light transmittance of 91% or more, a haze value of 1.5% or less, a folding endurance value (times) of 20 or more, and a heat shrinkage rate of less than 5% at least in either the machine direction or the transverse direction in a heat shrinkage test.



Printed by Jouve, 75001 PARIS (FR)

## Description

[Technical field]

The present invention relates to a novel and industrially useful acrylic resin film excellent in transparency, weather resistance, heat resistance and toughness.

In more detail, this invention relates to an acrylic resin film excellent in transparency, weather resistance, heat resistance and toughness, which can be used for the surfaces and skins of, for example, display materials such as flat display panels, interior and exterior materials of motor vehicles, electric appliances, and interior and exterior materials of building materials, and also relates to an acrylic resin film excellent in transparency, weather resistance, heat resistance and toughness, which can be used for the surface protection of polycarbonates, polyvinyl chloride, etc.

[Background art]

Acrylic resin films are excellent in transparency, surface gloss and light resistance. So, they are used for the surfaces and skins of, for example, liquid display sheets and films, optical materials such as light guide plates, interior and exterior materials of motor vehicles, exterior materials of automatic vending machines, electric appliances, interior and exterior materials of building materials, etc., and also for the surface protection of polycarbonates, polyvinyl chloride, etc. in wide fields.

In recent years, these resin films begin to be used also in severe environmental conditions requiring weather resistance and heat resistance as in outdoors and interiors of motor vehicles owing to the widespread use of, for example, car navigation systems, handy cameras, etc. For use under such severe environmental conditions, sheets and films with polymethyl methacrylate resin as the substrate have such problems that they are liable to be deformed due to low heat resistance and that they are liable to be cracked during processing due to low toughness, though they are excellent in transparency and weather resistance.

To overcome the above disadvantage, for the purpose of improving the heat resistance of an acrylic resin film, a film having glutaric anhydride units represented by the following general formula (2), is disclosed (patent documents 1 and 2).

[Chemical formula 2]

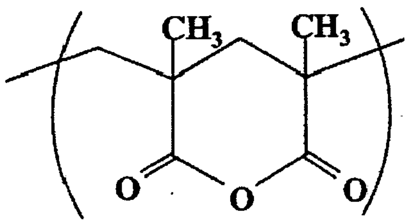

.....(2)

However, if the chemical composition of the acrylic resin film is merely adjusted to enhance heat resistance, flexibility becomes insufficient, making the film liable to be cracked by bending stress, and the toughness necessary for processing cannot be obtained.

For the purpose of enhancing both the heat resistance and the toughness of an acrylic resin film, a film in which an acrylic resin containing the glutaric anhydride units represented by the following general formula (1) is made to contain a crosslinked elastic material is disclosed (patent documents 3 and 4).

[Chemical formula 3]

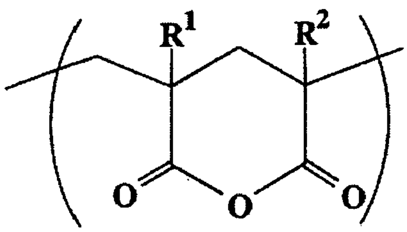

.....(1)

However, in patent document 3, since the refractive index of the elastic material is greatly different from that of the acrylic resin, the film is not transparent and cannot be used for optical application.

Furthermore, in patent document 4, since styrene is copolymerized, retardations occur in the plane of the film and in the thickness direction of the film, and the film cannot be used as a plastic substrate, polarizing plate protective film, prism sheet substrate, light guide plate, etc. respectively requiring optical isotropy.

Moreover, an acrylic resin film made of a composition consisting of an acrylic resin and elastic particles and having a heat shrinkage rate of 5% or more in a heat expansion/contraction test is disclosed (patent document 5). However, for example, the heat applied when a hard coat layer or reflection preventive film is formed causes the film to contract, revealing its poor dimensional stability, and no film with sufficient heat resistance necessary for processing can be obtained.

[Patent document 1] JP2004-2711A
[Patent document 2] JP7-268036A
[Patent document 3] JP60-67557A
[Patent document 4] JP2000-178399A
[Patent document 5] JP2000-109575A

[Disclosure of the invention]

[Problems to be solved by the invention]

An object of this invention is to provide a novel and industrially useful acrylic resin film excellent in transparency, weather resistance, heat resistance and toughness, since an acrylic resin film with such properties has not been available.

Another object of this invention is to provide an acrylic resin film which has a hard coat layer formed at least on one surface of the film, and further has a reflection preventive film formed at least on one surface of the film, and also to provide an optical filter comprising said film.

[Means for solving the problems]

In view of the aforesaid problems, the present inventors studied intensively to obtain an acrylic resin film excellent in transparency, weather resistance, heat resistance and toughness, and as a result, found that an acrylic resin film made of a material obtained by mixing specific acrylic elastic particles with an acrylic resin containing glutaric acid anhydride units, which has the total light transmittance, the haze value and the heat shrinkage rate in at least either the longitudinal direction or the transverse direction respectively kept in specific ranges and also has the folding endurance value (times) kept at 20 or more, can be an acrylic resin film having transparency, weather resistance, heat resistance, high toughness not achieved by the conventional findings, and excellent processing properties.

The acrylic resin film of this invention based on the aforesaid finding has the following constitutions [1] through [16].

[1] An acrylic resin film made of a material mainly composed of a mixture consisting of 50 to 95 parts by mass of an acrylic resin (A) containing the glutaric anhydride units, each represented by the following structural formula (1), and 5 to 50 parts by mass of acrylic elastic particles (B), with the total amount of the acrylic resin (A) and the acrylic elastic particles (B) as 100 parts by mass, and satisfying the following (i) to (v):

(i) The acrylic resin (A) consists of 50 to 90 parts by mass of methyl methacrylate units and 10 to 50 parts by mass of glutaric anhydride units with the amount of the entire acrylic resin (A) as 100 parts by mass.
(ii) The total light transmittance is 91% or more.
(iii) The haze value is 1.5% or less.
(iv) The folding endurance value (times) is 20 or more.
(v) The heat shrinkage rate in at least either the longitudinal direction or the transverse direction is less than 5% in a heat shrinkage test.

[Chemical formula 1]

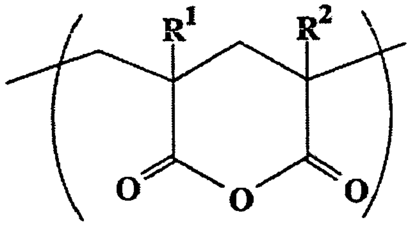

.....(1)

(where R1 and R2 denote, respectively independently, a hydrogen atom or alkyl group with 1 to 5 carbon atoms.)

[2] An acrylic resin film, according to [1], which has an elongation at breakage of 10% or more.

[3] An acrylic resin film, according to [1] or [2], wherein the retardation in the plane of the film to light with a wavelength of 590 nm is 10 nm or less.

[4] An acrylic resin film, according to any one of [1] through [3], wherein the retardation in the thickness direction of the film to light with a wavelength of 590 nm is 10 nm or less.

[5] An acrylic resin film, according to any one of [1] through [4], wherein the coefficient of photoelasticity to light with a wavelength of 550 nm is $-2 \times 10^{-12}$/Pa to $2 \times 10^{-12}$/Pa.

[6] An acrylic resin film, according to any one of [1] through [5], which contains 0.01 part by mass to 5 parts by mass of an ultraviolet light absorber, with the total amount of the acrylic resin (A) and the acrylic elastic particles (B) as 100 parts by mass.

[7] An acrylic resin film, according to any one of [1] through [6], wherein the light transmittance of light of 380 nm is 10% or less.

[8] An acrylic resin film, according to any one of [1] through [7], wherein the particle size of the acrylic elastic particles (B) is 50 nm to 400 nm.

[9] An acrylic resin film, according to any one of [1] through [8], wherein each of the acrylic elastic particles (B) consists of an inner layer made of an elastic rubber containing alkyl acrylate units and/or an aromatic vinyl and an outer layer made of a hard polymer mainly composed of an acrylic resin containing-glutaric anhydride units; and the difference between the acrylic elastic particles (B) and the acrylic resin (A) in refractive index is 0.01 or less.

[10] An acrylic resin film, according to any one of [1] through [9], which has a thermal deformation temperature of 110°C or higher.

[11] An acrylic resin film, according to any one of [1] through [10], wherein the remaining volatile content is 3 parts by mass or less per 100 parts by mass of the acrylic resin film.

[12] An acrylic resin film, according to any one of [1] through [11], which has a hard coat layer formed at least on one surface of the film, and further has a reflection preventive film formed at least on one surface of the film.

[13] An optical filter comprising the acrylic resin film as set forth in any one of [1] through [12].

[14] A polarizing plate protective film, comprising the acrylic resin film as set forth in any one of [1] through [12].

[15] A production method comprising the step of producing the acrylic resin film as set forth in any one of [1] through [12] using a solution casting method.

[16] A method for producing an acrylic resin film, comprising the step of stretching a substantially unstretched acrylic resin film at a temperature in a range from the glass transition temperature (Tg) to {the glass transition temperature (Tg) + 50°C} to 1.1 to 5.0 times in the longitudinal direction and in the transverse direction.

[Effects of the invention]

This invention can provide a novel and industrially useful acrylic resin film having excellent transparency, weather resistance and heat resistance and having high toughness. Especially particularly, this invention can realize an acrylic resin film remarkably improved, for example, to have a total light transmittance of 91% or more, a haze value of 1. 5% or less, a thermal deformation temperature of 110°C or higher and an elongation at breakage of 10% or more.

The acrylic resin film of this invention can be preferably used as an industrial material such as an optical filter requiring processing at high temperature. Furthermore, the film obtained like this is good also in surface hardness, thickness uniformity and surface adhesiveness and can be well used also for various other applications than the optical filter.

[The best modes for carrying out the invention]

Preferred modes for carrying out this invention will be described below.

The acrylic resin (A) used in this invention is required to contain glutaric anhydride units, each represented by the following general formula (1), in the molecule. The heat resistance of a resin film such as glass transition temperature (Tg) and thermal deformation temperature is decided by the degree of freedom of the resin structure. For example, an aromatic polyimide small in the degree of freedom, in which rigid benzene rings are bonded by rigid imide bonds, has Tg of higher than 400°C. On the other hand, polymethyl methacrylate (PMMA) as a soft aliphatic polymer large in the degree of freedom has Tg of lower than 100°C. Since the acrylic resin of this invention contains glutaric anhydride units as an alicyclic structure, it can be remarkably improved in heat resistance. Furthermore, in an application requiring optical isotropy, it is required that the retardation is small. If aromatic rings with many $\pi$ electrons are introduced, the heat resistance can be improved more than that achieved by introducing the alicyclic structure, but there is a problem that the retardation is liable to occur since the birefringence becomes also large. For this reason, it is most preferred to contain the alicyclic structure for improving heat resistance while keeping optical isotropy. Examples of the alicyclic structure include glutaric anhydride structure, lactone ring structure, norbornene structure, cyclopentane structure, etc. For optical isotropy and heat resistance, irrespective of the structure used, similar effects can be obtained. However, for introducing the lactone ring structure, norbornene structure, cyclopentane structure, etc., it is necessary to use an expensive raw material having any of these structures or to use an expensive raw material as a precursor destined to have any of these structures, and to undergo several steps of reactions, for introducing the intended structure. So, introducing any of these structures is industrially disadvantageous. On the other hand, glutaric anhydride units are industrially very advantageous, since they can be obtained by one step of dehydration and/or dealcoholization reaction from a general raw acrylic material.

In this specification, an application requiring optical isotropy refers to an application in which optical isotropy is required inside the material concerned. Particular applications include a polarizing plate protective film, lens, optical waveguide core, etc. In a liquid crystal TV set, two polarizing plates are used in perpendicular or parallel to each other. In the case where the polarizing plate protective film does not exist or optically isotropic, two polarizing plates perpendicular to each other display black, and two polarizing plates parallel to each other display white. On the other hand, in the case where the polarizing plate protective film is not optically isotropic, two polarizing plates perpendicular to each other display, for example, dark violet instead of black, and two polarizing plates parallel to each other display, for example, yellow instead of white. The coloration depends on the anisotropy of the polarizing plate protective film. Optically it is ideal that no polarizing plate protective film exists, but for the purpose of protecting the polarizer from external stress and water, it is inevitably required. Furthermore, in the case of a lens, though a lens is intended to refract light at its interface, but is required to allow light to propagate uniformly in the lens. An internally optically anisotropic lens has such a problem that an image is distorted. In the case of an optical waveguide core, if it is optically anisotropic, difference arises between the signal transfer rate of waves in the transverse direction and that of waves in the longitudinal direction, to cause such problems as noise and interference. Other applications requiring optical isotropy include a prism sheet substrate, optical disc substrate, flat panel display substrate, etc.

A method for producing an acrylic resin containing glutaric anhydride units will be described below in detail.

[Chemical formula 4]

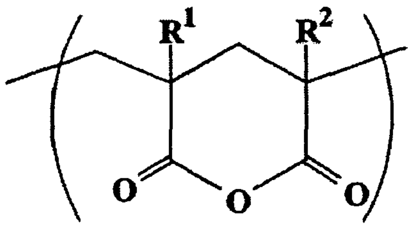

.....(1)

(where R1 and R2 denote, respectively independently, a hydrogen atom or alkyl group with 1 to 5 carbon atoms).

An unsaturated carboxylic acid monomer (i) and an unsaturated alkyl carboxylate monomer (ii) respectively capable of giving the glutaric anhydride units represented by said general formula (1) in a later heating step, and a vinyl-based monomer (iii) capable of giving further other vinyl-based monomer units, if it is intended to let the produced polymer contain said units, are polymerized to obtain a copolymer (a), and the copolymer (a) is heated in the presence or absence of an adequate catalyst, to perform an intramolecular cyclization reaction by dealcoholization and/or dehydration, for producing the acrylic resin. In this case, typically, if the copolymer (a) is heated, water is removed from the carboxyl

groups of two unsaturated carboxylic acid units, or an alcohol is removed from an unsaturated carboxylic acid unit and an unsaturated alkyl carboxylate unit adjacent to each other, to produce one said glutaric acid anhydride unit.

The unsaturated carboxylic acid monomer (i) used in this case is not especially limited, and an unsaturated carboxylic acid monomer of general formula (4) capable of being copolymerized with the further other vinyl compound (iii) can be used.

[Chemical compound 5]

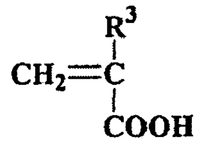

.....( i )

(where R3 denotes a hydrogen atom or alkyl group with 1 to 5 carbon atoms)

Acrylic acid and methacrylic acid are preferred, since they are especially excellent in thermal stability, and methacrylic acid is more preferred. Any one of the unsaturated carboxylic acid monomers can be used, or two or more of them can also be used together. Meanwhile, if an unsaturated carboxylic acid monomer (i) represented by said general formula (i) is copolymerized, unsaturated carboxylic acid units with a structure represented by the following general formula (i-2) can be given.

[Chemical formula 6]

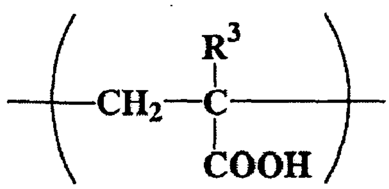

.....( i -2)

(where R3 denotes a hydrogen atom or alkyl group with 1 to 5 carbon atoms).

Furthermore, as the unsaturated alkyl carboxylate monomer (ii), methyl methacrylate is necessary in view of the transparency and weather resistance of the obtained film. Further other one or more unsaturated alkyl carboxylate monomers can be used together with methyl methacrylate. The other unsaturated alkyl carboxylate monomers are not especially limited. As preferred examples, those represented by the following general formula (ii) can be enumerated.

[Chemical formula 7]

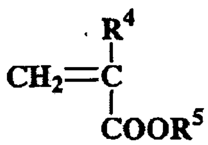

.....( ii )

(where R4 denotes a hydrogen atom or aliphatic or alicyclic hydrocarbon group with 1 to 5 carbon atoms, and R5 denotes an arbitrary substituent group other than a hydrogen atom).

Among them, acrylates and/or methacrylates respectively having an aliphatic or alicyclic hydrocarbon group with 1 to 6 carbon atoms or said hydrocarbon group with a substituent group are especially suitable. Meanwhile, if an unsaturated alkyl carboxylate monomer represented by said general formula (ii) is copolymerized, unsaturated alkyl carboxylate units with a structure represented by the following general formula (ii-2) are given.

[Chemical formula 8]

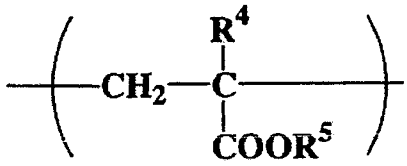

...... (ii-2)

(where R4 denotes a hydrogen atom or aliphatic or alicyclic hydrocarbon group with 1 to 5 carbon atoms, and R5 denotes an arbitrary substituent group other than a hydrogen atom).

Preferred examples of the unsaturated alkyl carboxylate monomer (ii) other than methyl methacrylate include ethyl (meth)acrylate, n-propyl (meth)acrylate, n-butyl (meth)acrylate, t-butyl (meth)acrylate, n-hexyl (meth)acrylate, cyclohexyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate, 2,3,4,5-tetrahydroxypentyl (meth)acrylate, etc.

Furthermore, in the production of the acrylic resin (A) used in this invention, the further other vinyl-based monomer (iii) can also be used to such an extent that the effects of this invention are not impaired. Preferred examples of the further other vinyl-based monomer (iii) include aromatic vinyl-based monomers such as styrene, α-methylstyrene, o-methylstyrene, p-methylstyrene, o-ethylstyrene, p-ethylstyrene and p-t-butylstyrene, vinyl cyanide-based monomers such as acrylonitrile, methacrylonitrile and ethacrylonitrile, allyl glycidyl ether, styrene-p-glycidyl ether, p-glycidyl styrene, maleic anhydride, itaconic anhydride, N-methylmaleimide, N-ethylmaleimide, N-cyclohexylmaleimide, N-phenylmaleimide, acrylamide, methacrylamide, N-methylacrylamide, butoxymethylacrylamide, N-propylmethacrylamide, aminoethyl acrylate, propylaminoethyl acrylate, dimethylaminoethyl methacrylate, ethylaminopropyl methacrylate, phenylaminoethyl methacrylate, cyclohexylaminoethyl methacrylate, N-vinyldiethylamine, N-acetylvinylamine, allylamine, methallylamine, N-methylallylamine, p-aminostyrene, 2-isopropenyl-oxazoline, 2-vinyl-oxazoline, 2-acroyl-oxazoline, 2-styryl-oxazoline, etc. In view of transparency, birefringence and chemicals resistance, a monomer not containing an aromatic ring can be more preferably used. Any one of them can be used, or two or more of them can also be used together.

For producing the acrylic resin (A) by polymerization, any publicly known polymerization method such as block polymerization, solution polymerization, suspension polymerization or emulsion polymerization based on radical polymerization can be basically used. In view of few impurities, solution polymerization, block polymerization and suspension polymerization are especially preferred.

The polymerization temperature is not especially limited. In view of color tone, it is preferred to polymerize a monomer mixture containing an unsaturated carboxylic acid monomer and an unsaturated alkyl carboxylate monomer at a polymerization temperature of 95°C or lower. To further inhibit the coloration after completion of heat treatment, a polymerization temperature of 85°C or lower is preferred, and especially preferred is 75°C or lower. The lower limit of polymerization temperature is not especially limited if the polymerization can take place at the temperature. In view of productivity with the polymerization rate taken into account, the temperature is usually 50°C or higher, and preferred is 60°C or higher. For the purpose of enhancing the polymerization yield or polymerization rate, the polymerization temperature can also be raised with the progression of polymerization. Also in this case, it is preferred to control the upper limit temperature at 95°C or lower, and it is preferred to keep the polymerization initiation temperature also at a relatively low temperature of 75°C or lower. The polymerization time is not especially limited, if the time is long enough to obtain the necessary polymerization degree. In view of production efficiency, a range from 60 to 360 minutes is preferred, and a range from 90 to 180 minutes is especially preferred.

It is preferred that the acrylic resin (A) used for the acrylic resin film of this invention has a weight average molecular weight of 80,000 to 150,000. The acrylic resin (A) with such a molecular weight can be obtained if the copolymer (a) is controlled to have a desired molecular weight, namely, a weight average molecular weight of 50,000 to 150,000 when it is produced. If the weight average molecular weight is more than 150,000, coloration tends to occur in a later step of heat degassing. On the other hand, if the weight average molecular weight is less than 50,000, the acrylic resin film tends to decline in mechanical strength.

The method for controlling the molecular weight of the copolymer (a) is not especially limited, and for example, a publicly known ordinary technique can be applied. For example, the molecular weight can be controlled by controlling the added amount of the radical polymerization initiator such as an azo compound or peroxide or the added amount of the chain transfer agent such as an alkyl mercaptan, carbon tetrachloride, carbon tetrabromide, dimethylacetamide, dimethylformamide or triethylamine. Especially in view of stability of polymerization, easiness of handling or the like, the method of controlling the added amount of the alkyl mercaptan as a chain transfer agent can be preferably used.

Examples of the alkyl mercaptan used in this invention include n-octyl mercaptan, t-dodecyl mercaptan, n-dodecyl mercaptan, n-tetradecyl mercaptan, n-octadecyl mercaptan, etc. Among them, t-dodecyl mercaptan and n-dodecyl mercaptan can be preferably used.

The added amount of the alkyl mercaptan is not especially limited, if the specific molecular weight of this invention can be controlled. Usually it is 0.2 to 5.0 parts by mass per 100 parts by mass of the entire monomer mixture. A preferred range is 0.3 to 4.0 parts by mass, and a more preferred range is 0.4 to 3.0 parts by mass.

The method for producing a thermoplastic polymer containing glutaric anhydride units by heating the copolymer (a) of this invention for causing (I) dehydration and/or (II) dealcoholization to perform the intramolecular cyclization reaction is not especially limited. A production method in which the copolymer is passed through a heated vent extruder or a production method using an apparatus allowing devolatilization by heating in an inert gas atmosphere or in vacuum is preferred in view of productivity. If the intramolecular cyclization reaction is performed by heating in the presence of oxygen, the yellowness tends to be worse. So, it is preferred to sufficiently replace the atmosphere in the system by an inert gas such as nitrogen. An especially preferred apparatus is, for example, a single-screw extruder, double-screw extruder or triple-screw extruder having "unimelt" type screws or a continuous or batch kneading machine, etc. Above all, a double-screw extruder can be preferably used. Any of these apparatuses having a structure capable of introducing an inert gas such as nitrogen is more preferred. For example, as a method for introducing an inert gas such as nitrogen into a double-screw extruder, a pipe for introducing about 10 to 100 liters/min of an inert gas stream can be connected to the top and/or bottom of a hopper.

The temperature for heat devolatilization by the aforesaid method is not especially limited if (I) dehydration and/or (II) dealcoholization can be caused to perform the intramolecular cyclization reaction at the temperature. A preferred temperature range is 180 to 300°C, and an especially preferred range is 200 to 280°C.

Moreover, the time for heat devolatilization is not especially limited either, and can be set adequately in response to the desired chemical composition of the copolymer. The time is usually 1 minute to 60 minutes. A preferred range is 2 minutes to 30 minutes, and an especially preferred range is 3 to 20 minutes. Especially it is preferred that the length/diameter ratio (L/D) of the extruder screw is 40 or more for securing the heating time for letting the intramolecular cyclization reaction sufficiently take place in the extruder. If an extruder with short L/D is used, many unreactive unsaturated carboxylic acid units remain, and the reaction can takes place again during heat molding. As a result, the molded product tends to show silver streams and bubbles, and the color tone tends to be greatly worsened during residence for molding.

Furthermore, in this invention, one or more of acids, alkalis and salt compounds can be added as a catalyst for promoting the cyclization reaction into the glutaric anhydride when the copolymer (a) is heated by the aforesaid method or the like. The added amount is not especially limited, but about 0.01 to about 1 part by mass per 100 parts by mass of the copolymer (a) is adequate. Moreover, these acids, alkalis and salt compounds are not especially limited either. The acid catalyst can be selected from hydrochloric acid, sulfuric acid, p-toluenesulfonic acid, phosphoric acid, phosphorous acid, phenylphosphonic acid, methyl phosphate, etc. The basic catalyst can be selected from metal hydroxides, amines, imines, alkali metal derivatives, alkoxides, ammonium hydroxides, etc. Furthermore, the salt-based catalyst can be selected from metal acetates, metal stearates, metal carbonates, etc. Meanwhile, when the catalyst is added, it must be ensured that the color peculiar to the catalyst does not adversely affect the coloration of the thermoplastic polymer and does not lower the transparency. Above all, a compound containing an alkali metal can be preferably used since even a relatively small amount can exhibit an excellent effect of promoting the reaction. Particular examples of the compound include hydroxides such as lithium hydroxide, sodium hydroxide and potassium hydroxide, alkoxide compounds such as sodium methoxide, sodium ethoxide, sodium phenoxide, potassium methoxide, potassium ethoxide and potassium phenoxide, organic carboxylates such as lithium acetate, sodium acetate, potassium acetate and sodium stearate, etc. Above all, sodium hydroxide, sodium methoxide, lithium acetate and sodium acetate can be preferably used.

The content of the glutaric anhydride units represented by said general formula (1) in the acrylic resin (A) used in this invention is 10 to 50 parts by mass per 100 parts by mass of the acrylic resin (A). A more preferred range is 15 to 45 parts by mass, and the most preferred range is 20 to 25 parts by mass. If the content of the glutaric anhydride units is less than 10 parts by mass, the effect of improving heat resistance may be too small. Furthermore, if the content of the glutaric anhydride units is more than 50 parts by mass, toughness may decline. The improvement of heat resistance and the improvement of toughness are in the relation of trade-off, and the relation can be adjusted by adjusting the content of glutaric anhydride units. So, any desired value should be employed in the range from 10 to 50 parts by mass as the content of glutaric anhydride units in response to each application. For example, a polarizing plate protective film requires Tg of 120°C or higher, and considering the drop of Tg caused by adding the elastic particles, the most preferred range for the content of glutaric anhydride units is 20 to 25 parts by mass. If the content of glutaric anhydride units is 20 to 25 parts by mass, Tg of 120 to 130°C and sufficient toughness can be ensured after adding the elastic particles.

Other components contained in the acrylic resin (A) are methyl methacrylate units, methacrylic acid units, etc. It is necessary that methyl methacrylate units are contained. It is preferred that the amount obtained by removing the content of glutaric anhydride units from 100 parts by mass of the acrylic resin (A) is the content of methyl methacrylate units. That is, it is preferred that the content of methyl methacrylate units is 50 to 90 parts by mass.

In addition to the glutaric anhydride units and methyl methacrylate units, methacrylic acid units as a precursor

of glutaric anhydride units can also be contained. It is not preferred that methacrylic acid units or methyl methacrylate units are adjacent to methacrylic acid units, since dehydration or dealcoholization reaction can occur during heating in the steps of film formation, stretching, etc., to cause bubbling. However, since neither dehydration nor dealcoholization reaction can occur when glutaric anhydride units are adjacent, methacrylic acid units can be contained.

For determining the units of the respective components in the acrylic resin (A) used in this invention, in general, an infrared spectrophotometer and a proton nuclear magnetic resonance ($^1$H-NMR) spectrometer are used. In the infrared spectroscopy, the absorption at 1800 $cm^{-1}$ and 1760 $cm^{-1}$ is characteristic of glutaric anhydride units, and they can be distinguished from unsaturated carboxylic acid units and unsaturated alkyl carboxylate units. Furthermore, in the $^1$H-NMR spectroscopy, for example, in the case of a copolymer consisting of glutaric anhydride units, methacrylic acid and methyl methacrylate, the peaks of the spectrum in deuterated dimethyl sulfoxide solvent can be decided to be attributable as follows: the peak at 0.5 to 1.5 ppm, to the hydrogen of α-methyl groups of methacrylic acid, methyl methacrylate and glutaric anhydride compound; the peak at 1.6 to 2.1 ppm, to the hydrogen of methylene groups in the main chain of the polymer; the peak at 3.5 ppm, to the hydrogen of methyl methacrylate as a carboxylate ($-COOCH_3$); and the peak at 12.4 ppm, to the hydrogen of methacrylic acid as a carboxylic acid. In this way, the chemical composition of the copolymer can be decided from the integral ratio in the spectrum. In the case of a copolymer containing styrene as a further other component in addition to the above, the peak at 6.5 to 7.5 ppm is attributable to the hydrogen of the aromatic ring of styrene, and similarly the chemical composition of the copolymer can be decided from the ratio in the spectrum.

Furthermore, the acrylic resin (A) used in this invention can contain unsaturated carboxylic acid units and/or copolymerizable further other vinyl-based monomer units.

It is preferred that the amount of the unsaturated carboxylic acid units used in this invention is 10 parts by mass or less, namely, 0 to 10 parts by mass per 100 parts by mass of the acrylic resin (A). A more preferred range is 0 to 5 parts by mass, and the most preferred range is 0 to 1 part by mass. If the amount of the unsaturated carboxylic acid units is more than 10 parts by mass, the colorless transparency and residence stability tend to decline.

Moreover, it is preferred that the amount of further other vinyl-based monomer units copolymerizable with the acrylic resin (A) is 5 parts by mass or less, namely, in a range from 0 to 5 parts by mass per 100 parts by mass of the acrylic resin (A). A more preferred range is 0 to 3 parts by mass. If the content exceeds the aforesaid range in the case where units of an aromatic vinyl-based monomer such as styrene are contained, colorless transparency, optical isotropy and chemicals resistance tend to decline.

In this invention, if the acrylic elastic particles (B) are dispersed in said acrylic resin (A), excellent impact resistance can be imparted without greatly impairing the excellent properties of the acrylic resin (A). As the acrylic elastic particles (B), a multilayer structure polymer (B-1) called a core-shell type polymer in which each of the particles consists of one or more layers containing a gum polymer and one or more layers composed of a polymer different from the gum polymer, while the respective layers are adjacent to each other can be preferably used. Otherwise, a graft copolymer (B-2) in which a monomer mixture containing a vinyl-based monomer, etc. is copolymerized in the presence of a gum polymer can also be preferably used.

In the core-shell type multilayer structure polymer (B-1) used in this invention, the number of layers constituting it is not especially limited. Two or more layers are only required, and three or more layers or four or more layers can also be employed. However, the polymer is required to be a polymer with a multi-layer structure containing at least one or more rubber layers in it.

In the multilayer structure polymer (B-1) of this invention, the rubber in the rubber layer is not especially limited and is only required to be obtained by polymerizing a component with rubber resiliency. It can be, for example, a rubber obtained by polymerizing an acrylic component, silicone component, styrene component, nitrile component, conjugated diene component, urethane component, or ethylene component, propylene component, isobutene component, etc. A preferred rubber consists of, for example, an acrylic component such as ethyl acrylate units or butyl acrylate units, silicone component such as dimethylsiloxane units or phenylmethylsiloxane units, styrene component such as styrene units or α-methylstyrene units, nitrile component such as acrylonitrile units or methacrylonitrile units, or conjugated diene component such as butadiene units or isoprene units. Furthermore, a rubber consisting of a combination of two or more of these components is also preferred. Examples of the rubber include (1) a rubber consisting of an acrylic component such as ethyl acrylate units or butyl acrylate units and a silicone component such as dimethylsiloxane units or phenylmethylsiloxane units, (2) a rubber consisting of an acrylic component such as ethyl acrylate units or butyl acrylate units and a styrene component such as styrene units or α-methylstyrene units, (3) a rubber consisting of an acrylic component such as ethyl acrylate units or butyl acrylate units and a conjugated diene component such as butadiene units or isoprene units, and (4) a rubber consisting of an acrylic component such as ethyl acrylate units or butyl acrylate units, a silicone component such as dimethylsiloxane units or phenylmethylsiloxane units, and a styrene component such as styrene units or α-methylstyrene units, etc. A rubber obtained by crosslinking a copolymer consisting of these components and a crosslinkable component such as divinylbenzene units, allyl acrylate units or butylene glycol diacrylate units, etc. is also preferred.

In the multilayer structure polymer (B-1) of this invention, the material of the layer (s) other than the rubber

layer (s) is not especially limited if it consists of a thermoplastic polymer component, but is preferably a polymer component with a glass transition temperature higher than that of the rubber layer(s). The thermoplastic polymer can be a polymer containing at least one or more kinds of units selected from unsaturated alkyl carboxylate-based units, unsaturated carboxylic acid-based units, unsaturated glycidyl group-containing units, unsaturated dicarboxylic anhydride-based units, aliphatic vinyl-based units, aromatic vinyl-based units, vinyl cyanide-based units, maleimide-based units, unsaturated dicarboxylic acid-based units and other vinyl-based units. Above all, preferred is a polymer containing at least one or more kinds of units selected from unsaturated alkyl carboxylate-based units, unsaturated glycidyl group-containing units and unsaturated dicarboxylic anhydride-based units. More preferred is a polymer containing at least one or more kinds of units selected from unsaturated glycidyl group-containing units and unsaturated dicarboxylic anhydride-based units.

The monomer as the raw material of said unsaturated alkyl carboxylate-based units is not especially limited, and an alkyl (meth)acrylate can be preferably used. Particular examples of it include methyl (meth)acrylate, ethyl (meth) acrylate, n-propyl (meth)acrylate, n-butyl (meth)acrylate, t-butyl (meth)acrylate, n-hexyl (meth)acrylate, 2-ethylhexyl (meth)acrylate, cyclohexyl (meth)acrylate, stearyl (meth)acrylate, octadecyl (meth)acrylate, phenyl (meth)acrylate, benzyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate, 2,3,4,5-tetrahydroxypentyl (meth)acrylate, aminoethyl acrylate, propylaminoethyl acrylate, dimethylaminoethyl methacrylate, ethylaminopropyl methacrylate, phenylaminoethyl methacrylate, cyclohexylaminoethyl methacrylate, etc. In view of a large effect of improving impact resistance, methyl (meth)acrylate can be preferably used. Any one kind of these units can be used, or two or more kinds of the units can also be used together.

The unsaturated carboxylic acid monomer is not especially limited, and can be selected from acrylic acid, methacrylic acid, maleic acid, the hydrogenation product of maleic anhydride, etc. Especially in view of excellent thermal stability, acrylic acid and methacrylic acid are preferred, and methacrylic acid is more preferred. Any one of them can be used, or two or more of them can also be used together.

The monomer as the raw material of the unsaturated glycidyl group-containing units is not especially limited, and can be selected from glycidyl (meth)acrylate, glycidyl itaconate, diglycidyl itaconate, allyl glycidyl ether, styrene-4-glycidyl ether, 4-glycidyl styrene, etc. In view of a large effect of improving impact resistance, glycidyl (meth)acrylate can be preferably used. Any one of them can be used or two or more of them can also be used together.

The monomer used as the raw material of the unsaturated dicarboxylic anhydride-based units can be selected from maleic anhydride, itaconic anhydride, glutaconic anhydride, citraconic anhydride, aconitic anhydride, etc. In view of a large effect of improving impact resistance, maleic anhydride can be preferably used. Any one of them can be used or two or more of them can also be used together.

Furthermore, the monomer as the raw material of the aliphatic vinyl-based units can be selected from ethylene, propylene, butadiene, etc. The monomer as the raw material of the aromatic vinyl-based units can be selected from styrene, α-methylstyrene, 1-vinylnaphthalene, 4-methylstyrene, 4-propylstyrene, 4-chyclohexylstyrene, 4-dodecylstyrene, 2-ethyl-4-benzylstyrene, 4-(phenylbutyl) styrene, halogenated styrene, etc. The monomer as the raw material of the vinyl cyanide-based units can be selected from acrylonitrile, methacrylonitrile, ethacrylonitrile, etc. The monomer as the raw material of the maleimide-based units can be selected from maleimide, N-methylmaleimide, N-ethylmaleimide, N-propylmaleimide, N-isopropylmaleimide, N-cyclohexylmaleimide, N-phenylmaleimide, N-(p-bromophenyl)maleimide, N-(chlorophenyl)maleimide, etc. The monomer as the raw material of the unsaturated dicarboxylic acid-based units can be selected from maleic acid, monoethyl maleate, itaconic acid, phthalic acid, etc. The monomer as the raw material of the other vinyl-based units can be selected from acrylamide, methacrylamide, N-methylacrylamide, butoxymethylacrylamide, N-propylmethacrylamide, N-vinyldiethylamine, N-acetylvinylamine, allylamine, methallylamine, N-methylallylamine, p-aminostyrene, 2-isopropenyl-oxazoline, 2-vinyl-oxazoline, 2-acroyl-oxazoline, 2-styryl-oxazoline, etc. Any one of the monomers can be used, or two or more of them can also be used together.

In the multilayer structure polymer (B-1) containing the gum polymer of this invention, the material of the outermost layer is not especially limited and can be at least one selected from polymers containing unsaturated alkyl carboxylate-based units, unsaturated carboxylic acid-based units, unsaturated glycidyl group-containing units, aliphatic vinyl-based units, aromatic vinyl-based units, vinyl cyanide-based units, maleimide-based units, unsaturated dicarboxylic acid-based units, unsaturated dicarboxylic anhydride-based units, other vinyl-based units, etc. Above all, preferred is at least one selected from polymers containing unsaturated alkyl carboxylate-based units, unsaturated carboxylic acid-based units, unsaturated glycidyl group-containing units and unsaturated dicarboxylic anhydride-based units. More preferred is a polymer containing unsaturated alkyl carboxylate-based units and unsaturated carboxylic acid-based units.

Moreover, in this invention, it has been found that in the case where the outermost layer of the multilayer structure polymer (B-1) is a polymer containing unsaturated alkyl carboxylate-based units and unsaturated carboxylic acid-based units, heating causes the intramolecular cyclization to take place for producing the glutaric anhydride units represented by said general formula (1) as in said production of the thermoplastic copolymer (A) of this invention described before. Therefore, if the multilayer structure polymer (B-1) in which the outermost layer contains a polymer containing unsaturated alkyl carboxylate-based units and unsaturated carboxylic acid-based units is mixed with the thermoplastic

copolymer (A), and the mixture is heated and melt-kneaded under adequate conditions, then it can be considered that the multilayer structure polymer (B-1) in which the outermost layer has a polymer containing the glutaric anhydride units represented by said general formula (1) is dispersed in the thermoplastic copolymer (A) substantially forming a continuous phase (matrix phase), to ensure a good dispersion state without cohesion, and to improve mechanical properties such as impact resistance, and also to assure very high transparency.

The monomer as the raw material of the unsaturated alkyl carboxylate-based units in this case is not especially limited, but alkyl (meth)acrylates are preferred. Methyl (meth)acrylate can be more preferably used.

Furthermore, the monomer as the raw material of the unsaturated carboxylic acid-based units is not especially limited, but (meth)acrylic acid is preferred. Methacrylic acid can be more preferably used.

Preferred examples of the multilayer structure polymer (B-1) of this invention include a multilayer structure polymer in which the core layer is formed of butyl acrylate/styrene polymer, while the outermost layer is formed of a copolymer consisting of methyl methacrylate/glutaric anhydride units represented by said general formula (1) or methyl methacrylate/glutaric anhydride units represented by said general formula (1) /methacrylic acid polymer, a multilayer structure polymer in which the core layer is formed of dimethylsiloxane/butyl acrylate polymer, while the outermost layer is formed of methyl methacrylate polymer, a multilayer structure polymer in which the core layer is formed of butadiene/styrene polymer, while the outermost layer is formed of methyl methacrylate polymer, and a multilayer structure polymer in which the core layer is formed of butyl acrylate polymer, while the outermost layer is formed of methyl methacrylate polymer ("/" indicates copolymerization). Also a multilayer structure polymer in which the rubber layer and/or the outermost layer are respectively formed of a polymer containing glycidyl methacrylate units is a preferred example of the multilayer structure polymer. Above all, a multilayer structure polymer in which the core layer is formed of butyl acrylate/styrene polymer, while the outermost layer is formed of a copolymer consisting of methyl methacrylate/glutaric anhydride units represented by said general formula (1) or methyl methacrylate/glutaric anhydride units represented by said general formula (1)/methacrylic acid polymer, can be preferably used, for such reasons that the refractive index can be close to that of the acrylic resin (A) forming the continuous phase (matrix phase), that a good dispersion state in the resin composition can be obtained, and that the transparency achieved can reach the level highly required in recent years.

It is preferred that the weight average particle size of the multilayer structure polymer (B-1) of this invention is 50 to 400 nm. A more preferred range is 100 to 200 nm. If the weight average particle size is less than 50 nm, the improvement of toughness may be insufficient, and if it is more than 400 nm, Tg may decline.

In the multilayer structure polymer (B-1) of this invention, the ratio by weight of the core to the shell is not especially limited, but it is preferred that the amount of the core layer per 100 parts by mass of the entire multilayer structure polymer is 50 parts by mass to 90 parts by mass. A more preferred range is 60 parts by mass to 80 parts by mass.

The multilayer structure polymer of this invention can also be a commercially available product satisfying the aforesaid conditions, or can also be produced by a publicly known method.

Examples of the commercially available products of the multilayer structure polymer include "Metabrene" produced by Mitsubishi Rayon Co., Ltd., "Kane Ace" produced by Kaneka Corp., "Paraloid" produced by Kureha Chemical Industry Co., Ltd., "Acryloid" produced by Rohm & Haas, "Staphyloid" produced by Ganz Chemical Co., Ltd., "Parapet SA" produced by Kuraray Co., Ltd., etc. Any one of them can be used or two or more of them can also be used together.

Particular examples of the gum-containing graft copolymer (B-2) usable as the acrylic elastic particles (B) of this invention include a graft copolymer obtained by copolymerizing a monomer mixture consisting of an unsaturated carboxylate-based monomer, unsaturated carboxylic acid-based monomer, aromatic vinyl-based monomer, and, as required, a further other vinyl-based monomer copolymerizable with them in the presence of a gum polymer.

The gum polymer used in the graft copolymer (B-2) is not especially limited, but a diene-based rubber, acrylic rubber, ethylene-based rubber, etc. can be used. Particular examples of it include polybutadiene, styrene-butadiene copolymer, styrene-butadiene block copolymer, acrylonitrile-butadiene copolymer, butyl acrylate-butadiene copolymer, polyisoprene, butadiene-methyl methacrylate copolymer, butyl acrylate-methyl methacrylate copolymer, butadiene-ethyl acrylate copolymer, ethylene-propylene copolymer, ethylene-propylene-diene-based copolymer, ethylene-isoprene copolymer, ethylene-methyl acrylate copolymer, etc. Any one of these gum polymers can be used or two or more of them can also be used as a mixture.

It is preferred that the weight average particle size of the gum polymer used in the graft copolymer (B-2) of this invention is 50 to 400 nm. A more preferred range is 100 to 200 nm. If the average particle size is smaller than 50 nm, the improvement of toughness may be insufficient, and if it is larger than 400 nm, Tg may decline.

Meanwhile, the weight average particle size of the gum polymer can be measured by the sodium alginate method described in "Rubber Age, Vol. 88, pages 484-490 (1960), by E. Schmidt, P.H. Biddison". This method uses the principle that the particle size of the polybutadiene creamed depends on the concentration of sodium alginate, and the weight average particle size of the gum polymer can be measured by a method of obtaining the particle size at a cumulative weight percentage of 50% from the rate of creamed weight and the cumulative weight percentage of sodium alginate concentration.

The graft copolymer (B-2) of this invention can be obtained by copolymerizing 20 to 90 parts by mass, preferably

30 to 80 parts by mass, more preferably 40 to 70 parts by mass of said monomers (mixture) in the presence of 10 to 80 parts by mass, preferably 20 to 70 parts by mass, more preferably 30 to 60 parts by mass of a gum polymer per 100 parts by mass of the graft copolymer (B-2). If the rate of the gum polymer is smaller or larger than the aforesaid range, impact strength and surface appearance may decline.

In the meantime, the graft copolymer (B-2) may contain a non-grafted copolymer produced when the monomer mixture is graft-copolymerized with the gum polymer. However, in view of impact strength, it is preferred that the grafting rate is 10 to 100%. In this specification, the grafting rate refers to the weight rate of the monomer mixture grafted to the gum polymer. The intrinsic viscosity of the non-grafted copolymer in methyl ethyl ketone solvent measured at 30°C is not especially limited, but it is preferred that the viscosity is 0.1 to 0.6 dl/g in view of the balance between impact strength and moldability.

The intrinsic viscosity of the vinyl-based copolymer (B-2) of this invention in methyl ethyl ketone solvent measured at 30°C is not especially limited, but it is preferred that the viscosity is 0.2 to 1.0 dl/g in view of the balance between impact strength and moldability. A more preferred range is 0.3 to 0.7 dl/g.

The method for producing the graft copolymer (B-2) of this invention is not especially limited, and the copolymer can be obtained by a publicly known polymerization method such as block polymerization, solution polymerization, suspension polymerization or emulsion polymerization.

Furthermore, it is preferred that the refractive index of the acrylic resin (A) is close to that of the acrylic elastic particles (B), since the acrylic resin film of this invention can be transparent. Particularly it is preferred that the difference of refractive index is 0.05 or less. More preferred is 0.02 or less, and especially preferred is 0.01 or less. To satisfy the refractive index condition, for example, a method of adjusting the composition ratio of the respective monomer units of the acrylic resin (A) and/or a method of adjusting the composition ratio of the gum polymer or monomers used in the acrylic elastic particles (B) can be used for reducing the difference of refractive index and for obtaining an acrylic resin film with excellent transparency. Particularly, the core layer is formed of butyl acrylate/styrene polymer, and the outermost layer is formed of a copolymer consisting of methyl methacrylate/glutaric anhydride units represented by said general formula (1) or methyl methacrylate/glutaric anhydride units represented by said general formula (1)/methacrylic acid polymer. The method for mixing the acrylic elastic particles and other additives with an acrylic resin can, for example, comprise the steps of blending the acrylic elastic particles with an acrylic resin, or blending an acrylic elastic particles and other additives with an acrylic resin beforehand and homogeneously melt-kneading the blend usually at 200 to 350°C using a single-screw or double-screw extruder.

In the melt kneading, the cyclization reaction of the unsaturated carboxylic acid monomer units and unsaturated alkyl carboxylate monomer units of the shell portion, etc. given to the acrylic elastic particles can also be performed simultaneously.

Meanwhile, the difference of refractive index in this specification refers to the difference between the refractive indexes measured as follows. The acrylic resin film of this invention is sufficiently dissolved into a solvent capable of dissolving the acrylic resin (A) under adequate conditions, to prepare a white turbid solution, and the solution is separated into a solvent soluble portion and an insoluble portion by such an operation as centrifugation. Then, the soluble portion {acrylic resin (A)} and the insoluble portion {acrylic elastic particles (B)} are refined respectively, and their refractive indexes (23°C, measuring wavelength 550 nm) are measured to obtain the difference of refractive index.

Furthermore, with regard to the substantial chemical compositions of the copolymers as the acrylic resin (A) and the acrylic elastic particles (B) in the acrylic resin film, the respective components can be individually analyzed after the aforesaid operation of separating into the soluble component and the insoluble component using said solvent.

The acrylic resin film of this invention with the aforesaid constitution can satisfy all such properties that the total light transmittance is 91% or more, that the haze value is 1.5% or less, that the folding endurance value (times) is 20 or more, and that the heat shrinkage rate in at least either the longitudinal direction or the transverse direction is less than 5%.

If the amount of the glutaric anhydride units per 100 parts by mass of the acrylic resin film is more than 50 parts by mass, the folding endurance value (times) may become less than 20, though the heat resistance intended as another object can be improved. Moreover, if intensive stretching is performed for the purpose of improving the folding endurance, the heat shrinkage rates in both the longitudinal direction and the transverse direction may become 5% or more. Furthermore, if styrene or maleic anhydride is copolymerized to improve the heat resistance and the folding endurance, the total light transmittance may become less than 91% or the haze value may become more than 1.5%. Meanwhile, the total light transmittance and the haze value of the acrylic resin are measured according to JIS K 7361 and JIS K 7136. In this specification, the heat shrinkage rate is obtained as described below. Two lines are drawn on a film, to have a width of 10 mm and a test length of about 200 mm, and the distance between the two lines is accurately measured as L0. The sample is allowed to stand in a 100°C oven for 30 minutes under no load, and the distance between the two lines is measured again as L1. The heat shrinkage rate is obtained from the following formula:

$$\text{Heat shrinkage rate (\%)} = \{(L0 - L1)/L0\} \times 100$$

It is needless to say that a larger total light transmittance and a larger folding endurance value (times) are preferred and that a smaller haze value and a smaller heat shrinkage rate are preferred.

It was described that the acrylic resin film of this invention can be suitably used for an application requiring optical isotropy. In an application requiring optical isotropy, the film concerned is required to protect the intended object from external stress, heat, chemicals, etc. without exerting any optical influence within the film when light falls on the film. That is, as an optical property, it is ideal that the total light transmittance is 100%. If the total light transmittance is low, there arises a problem of darkness if the film is used as a polarizing plate protective film, prism sheet or lens, or a problem of signal attenuation if the film is used as an optical waveguide or a core of an optical fiber. In this invention, the total light transmittance is required to be 91% or more, and 92% or more is preferred. There is no upper limit to the total light transmittance, but since the loss due to interface reflection cannot be avoided, the upper limit is generally about 99%. To approach a total light transmittance of 100%, the factors inhibiting it must be reduced. Therefore, the turbidity, namely, the haze is required to be small, ideally 0. In this invention, the haze value is required to be 1.5% or less. If the haze value is more than 1.5%, the total light transmittance may become less than 91%. A preferred haze value is 1.0% or less, and a more preferred haze value is 0.5% or less.

The acrylic resin film of this invention can be suitably used as a protective film, disc substrate, etc. For example, when it is used as a protective film, it must endure the stresses from outside for the purpose of protecting the material to be protected and furthermore, it per se must endure folding. In this invention, the folding endurance value (times) is required to be 20 or more. In this specification, the folding endurance value refers to the value obtained by measuring a film sample according to the method specified in JIS P 8115-1994. A preferred folding endurance value is 50 or more, and a more preferred value is 100 or more. When the acrylic resin film is used as a protective film or lens, the heat shrinkage rate is required to be small. It is not preferred that the protective film thermally shrinks, since the protected material is stressed. Furthermore, if a lens dimensionally changes, the problem of focus or the like occurs. In this invention, the heat shrinkage rate at least in either the longitudinal direction or the transverse direction is required to be less than 5%. Preferred is 2% or less, and more preferred is 1% or less. Ideal is 0%. Furthermore, it is preferred that the heat shrinkage rates in both the directions perpendicular to each other are less than 5%.

It is preferred that the elongation at breakage of the acrylic resin film of this invention at least in one direction is 10% or more. More preferred is 15% or more. It is further preferred that the elongation at breakage in the direction perpendicular to it is also 10% or more. It is preferred that the elongation at breakage of the acrylic resin film is 10% or more, since the acrylic resin film has moderate flexibility, to decrease the breaking of the film during film formation and during processing, for improving processability such as slitting capability. The elongation at breakage of the acrylic resin film can be measured according to the method specified in JIS C 2318. The upper limit of the elongation at breakage of the acrylic resin film is not especially limited, but is considered to be about 50% realistically. To obtain an acrylic resin film with such an elongation at breakage, it is desirable to adequately adjust the molecular weight of the acrylic resin, the content of cyclic units, the chemical composition, particle size and added amount of the acrylic elastic particles, their dispersion state in the acrylic resin film, etc.

For example, in the case of a polymer free from the acrylic elastic particles, consisting of glutaric anhydride units : methyl methacrylate units : methacrylic acid = 32 : 66 : 2 parts by mass, the elongation at breakage is 2%. However, if 20 parts by mass of two layers of particles with a particle size of 155 μm are added, the elongation at breakage can be increased to 13%.

It is preferred that the retardation of the acrylic resin film of this invention to light with a wavelength of 550 nm is 10 nm or less. More preferred is 5 nm or less, and further more preferred is 2 nm or less. If the retardation to light with a wavelength of 550 nm is 10 nm or less, the acrylic resin film can be suitably used as an optically isotropic protective film of a polarizing plate or optical disc, etc. It is preferred that the retardation to light with a wavelength of 550 nm is smaller if the film is used in any application requiring optical isotropy, but realistically the lower limit is considered to be about 0.1 nm. To obtain such an optically isotropic acrylic resin film, it is effective to avoid the introduction of an additive or an ingredient to be copolymerized, which increases a retardation or to lower the stretching ratio at the time of film formation. For example, if 20 parts by mass of two layers of particles with a particle size of 155 μm are added to a polymer consisting of glutaric anhydride units : methyl methacrylate units : methacrylic acid = 32 : 66 : 2 parts by mass in this invention, and a solution casting process is used to form a film, then a 41 μm thick film with a retardation of 0.1 nm can be obtained.

The retardation to light with a wavelength of 550 nm of this invention is obtained as described below. An automatic birefringence meter (KOBRA-21ADH) produced by Oji Scientific Instruments is used to measure the retardation to light with a wavelength of 480.4 nm, the retardation to light with a wavelength of 548.3 nm, the retardation to light with a wavelength of 628.2 nm and the retardation to light with a wavelength of 752.7 nm in the wavelength dispersion

measurement mode, and the respective coefficients a through d of Cauchy's wavelength dispersion formula {$R(\lambda) = a + b/\lambda 2 + c/\lambda 4 + d/\lambda 6$} are obtained from the retardation (R) at the respective wavelengths and measuring wavelength ($\lambda$). Then, wavelength 550 nm ($\lambda = 550$) is substituted into the Cauchy's wavelength dispersion formula, to obtain the retardation.

If the refractive indexes of the acrylic resin film of this invention to light with a wavelength of 590 nm in the orthogonal axis directions in the plane of the film are nx and ny respectively ($nx \geq ny$), the refractive index of the acrylic resin film to light with a wavelength of 590 nm in the thickness direction of the film is nz, and the thickness of the acrylic resin film is d (nm), then it is preferred that the retardation Rth in the thickness direction defined in the following formula is 10 nm or less. More preferred is 8 nm or less, and further more preferred is 5 nm or less. The most preferred is 2 nm or less. If the retardation Rth of the acrylic resin film in the thickness direction of the film is 10 nm or less, the acrylic resin film is excellent not only in the optical isotropy in the plane of the film but also in the optical isotropy in the thickness direction. So, it can be more suitably used as a protective film for a polarizing plate, optical disc, etc. In an application requiring the optical isotropy in the thickness direction, it is preferred that the retardation Rth in the thickness direction is smaller, but realistically the lower limit is considered to be about 0.1 nm. To obtain such an acrylic resin film small in the retardation Rth in the thickness direction, it is effective to avoid the introduction of an additive or an ingredient to be copolymerized, which increases the retardation in the thickness direction, and to lower the stretching ratio in the plane of the film and in the thickness direction at the time of film formation. For example, if 20 parts by mass of two layers of particles with a particle size of 155 $\mu$m are added to a polymer consisting of glutaric anhydride units : methyl methacrylate units : methacrylic acid = 32 : 66 : 2 parts by mass, and a solution casting process is used to form a film, then a 41 $\mu$m thick film with a retardation of 0.4 nm in the thickness direction can be obtained. Retardation in thickness direction, Rth (nm) = $d \times \{(nx + ny)/2 - nz\}$

It is preferred that the coefficient of photoelasticity of the acrylic resin film of this invention is $-2 \times 10^{-12}$/Pa to $2 \times 10^{-12}$/Pa. It is preferred that the coefficient of photoelasticity is $-2 \times 10^{-12}$/Pa to $2 \times 10^{-12}$/Pa, since the change of retardation is small even in the case where the acrylic resin film is stressed by such causes as the thermal expansion of another member stuck to the acrylic resin film, and the residual stress, when the acrylic resin film is used for a liquid crystal television with a large screen. It is preferred that the coefficient of photoelasticity is smaller since the change of retardation caused by stress is small, and a more preferred range is $-1 \times 10^{-12}$/Pa to $1 \times 10^{-12}$/Pa. The coefficient of photoelasticity of an acrylic resin film is generally small, but if styrene or maleimide is copolymerized or an aromatic substituent group is introduced respectively for improving heat resistance, then the coefficient of photoelasticity also becomes large. The acrylic resin film of this invention can satisfy both higher heat resistance and lower coefficient of photoelasticity owing to the glutaric anhydride structure.

It is preferred to add an ultraviolet light absorber to the acrylic resin film of this invention, depending on the application. As the ultraviolet light absorber, any desired material can be used. Examples of the ultraviolet light absorber include benzotriazole-based, salicylic ester-based, benzophenone-based, oxybenzophenone-based, cyanoacrylate-based, polymeric and inorganic absorbers. Commercially available ultraviolet light absorbers include, for example, Adekastab of Asahi Denka Kogyo K.K. represented by the following general formula (3), Tinuvin (registered trademark), Uvinul of BASF, and ultraviolet light absorbers of Johoku Chemical Co., Ltd.

[Chemical formula 9]

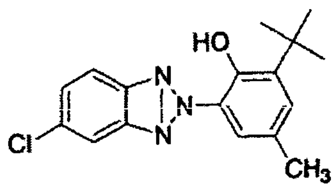

· · · · · (3)

Since an aromatic polymer absorbs ultraviolet light due to the aromatic rings in the main chain, it has a problem that the main chain is cut off by ultraviolet light to degrade the polymer. However, since the acrylic resin film of this invention does not absorb the ultraviolet light at the main chain portion, it is not degraded and can preferably have a function of cutting ultraviolet light as desired, depending on the ultraviolet light absorber selected and its amount. Furthermore, even if the ultraviolet light absorber added is an aromatic compound, the retardation is preferably unlikely to appear since the aromatic compound exists at random.

It is preferred that the added amount of the ultraviolet light absorber is 0.1 part by mass to 5 parts by mass per 100 parts by mass in total of the acrylic resin (A) and the acrylic elastic particles (B). If the amount is less than 0.1 part by mass, the desired effect may not be able to be obtained. Moreover, if the amount is more than 5 parts by mass, there

arise such problems that homogeneous dispersion cannot be achieved, that the total light transmittance declines, and that the haze value becomes large.

In general, light with a wavelength of 380 nm or less is called ultraviolet light. It is preferred that the acrylic resin film containing an ultraviolet light absorber is 10% or less in the transmittance of light of 380 nm. More preferred is 5% or less. The transmittance of light of 380 nm can be lowered by increasing the amount of the ultraviolet light absorber, and can be raised by decreasing the amount. If ultraviolet light can be sufficiently cut, a material sensitive to ultraviolet light can be protected. The transmittance of light of 380 nm is measured using the following instrument, to obtain the transmittance of light with each wavelength.

$$\text{Transmittance (\%)} = T1/T0 \times 100$$

where T1 is the intensity of the light transmitted through the sample, and T0 is the intensity of the light transmitted through air by the same distance except that it is not transmitted through the sample.
Instrument: UV measuring instrument U-3410 (produce by Hitachi Keisoku)
Wavelength range: 300 nm to 800 nm
Measuring speed: 120 nm/min
Measuring mode: Transmission

Measurement is performed in a range from 300 nm to 800 nm for other purposes, and the light transmittance of 380 nm refers to the value at 380 nm in this range.

Moreover, the acrylic resin film of this invention can further contain one or more of other acrylic resins (for example, polyethylene, polypropylene, acrylic resin, polyamide, polyphenylene sulfide resin, polyether ether ketone resin, polyester, polysulfone, polyphenylene oxide, polyacetal, polyimide, polyetherimide, etc.) and thermosetting resins (for example, phenol resin, melamine resin, polyester resin, silicone resin, epoxy resin, etc.) to such an extent that the object of this invention is not impaired. Furthermore, the acrylic resin film may also contain, as desired, additives, for example, a hindered phenol-based, benzoate-based or cyanoacrylate-based antioxidant, higher fatty acid, acid ester-based, acid amide-based or higher alcohol lubricant, plasticizer, releasing agent such as montanic or any of its salts, esters and half esters, stearyl alcohol, stearamide or ethylene wax, coloration preventive such as phosphite and hypophosphite, halogen-based, phosphorus-based or silicone-based non-halogen flame retarder, nucleating agent, amine-based, sulfonic acid-based or polyether-based antistatic agent, and coloring agent such as pigment. However, in reference to the properties required for each application, they are required to be added to such an extent that the colors of the additives do not adversely affect the thermoplastic polymer and do not lower the transparency.

In this invention, the method for mixing the acrylic elastic particles (B) and other arbitrary ingredients such as additives with the acrylic resin (A) is not especially limited. A method in which the acrylic resin (A) and other arbitrary ingredients are blended beforehand and subsequently homogeneously melt-kneaded by a single-screw or double-screw extruder usually at 200 to 350°C can be preferably used. Furthermore, in the case where the acrylic elastic particles (B) are mixed, a method in which both the ingredients (A) and (B) are mixed in a solution of a solvent capable of dissolving both the ingredients, being followed by removal of the solvent can be used.

Furthermore, as the method for producing the acrylic resin used in the acrylic resin film of this invention, a monomer mixture containing an unsaturated carboxylic acid monomer and an unsaturated alkyl carboxylate monomer is copolymerized to obtain a copolymer (a), and the copolymer (a) and the acrylic elastic particles (B) are blended beforehand and subsequently homogeneously melt-kneaded using a single-screw or double-screw extruder usually at 200 to 350°C, to perform the aforesaid cyclization reaction of the ingredient (a) and to mix the ingredient (B). Moreover, in this case, the cyclization reaction in the case where the ingredient (B) partially contains a copolymer consisting of unsaturated carboxylic acid monomer units and unsaturated alkyl carboxylate monomer units can also be simultaneously performed.

It is preferred that the acrylic resin used in the acrylic resin film of this invention is filtered for the purpose of removing foreign matters. If foreign matters are removed, the film can be used effectively as a film for optical application. For the filtration, a publicly known method can be used. However, it is preferred that the resin dissolved in such a solvent as tetrahydrofuran, acetone, methyl ethyl ketone, dimethylformamide, dimethyl sulfoxide or N-methylpyrrolidone is filtered at a temperature of 25°C to 100°C using an adequate filer such as a sintered metal, porous ceramic, sand or metallic screen, for preventing that the resin is colored.

The acrylic resin film of this invention has such excellent heat resistance that its thermal deformation temperature is 110°C or higher. There is no particular upper limit to the thermal deformation temperature. It is preferred that the thermal deformation temperature is 130°C or higher. In view of balance between toughness and the elongation at breakage, the upper limit is about 200°C.

With regard to the thermal deformation temperature, thermomechanical analysis (TMA) is used to heat a test

sample, to plot the amount of deformation for each test temperature, and the temperature at which the amount of deformation is 2% or more is identified as the thermal deformation temperature. Meanwhile, for TMA, a thermal analysis station (MTS-9000) produced by Shinku Riko K.K. is used, and a test sample with a width of 4 mm and a test length of 15 mm is loaded with a tensile load of 15 $kgf/mm^2$ sectional area of the test sample using a sample measuring module (TM-9400), to measure the thermal deformation temperature.

As the method for producing the acrylic resin film of this invention, a publicly known method can be used. That is, such a production method as inflation method, T-die method, calender method, cutting method, solution casting process (casting method), emulsion method or hot press method can be used. Among them, inflation method, T-die method, casting method and hot press method can be preferably used.

In the case where a solution casting process is used, it is preferred that the remaining volatile content in 100 parts by mass of the acrylic resin film containing the remaining volatile matter is 3 parts by mass or less. If the remaining volatile content is more than 3 parts by mass, such problems that the apparent Tg declines, that blocking lowers film windability, and that the organic solvent bleeds out with the lapse of time, to lower the adhesiveness to another member are liable to occur.

In this invention, the remaining volatile content of the acrylic resin film is defined as that obtained by the following evaluation method. A thermogravimetric analyzer is used to measure the heat loss of the acrylic resin film in a nitrogen atmosphere at a heating rate of 10°C/min, and the remaining volatile content is obtained from the following formula based on the mass at 35°C and the mass at 200°C.

$$\text{Remaining volatile content of acrylic resin film (parts by mass)} = \{(\text{Mass at } 35^\circ\text{C} - \text{Mass at } 200^\circ\text{C})/(\text{Mass at } 35^\circ\text{C}) \times 100$$

A more preferred remaining volatile content is 2 parts by mass or less, and a further more preferred content is 1 part by mass or less. The most preferred content is 0.5 part by mass or less. It is preferred that the remaining volatile content of the acrylic resin film is lower, but realistically the lower limit is considered to be about 100 ppm.

Next, the solution casting process as a preferred film forming method of this invention will be described. The solvent in which the acrylic resin is dissolved is not especially limited, and examples of it include halogenated hydrocarbon-based organic solvents such as methylene chloride, ethylene chloride and chloroform, ketone-based organic solvents such as acetone and methyl ethyl ketone, tetrahydrofuran, dimethylformamide, dimethyl sulfoxide, N-methyl-2-pyrrolidone, etc. Anyone of these solvents can be used or two or more of them can also be used as a mixture. In the case where an acrylic resin is prepared by solution polymerization, the polymerization solution can be used as it is as an acrylic solution to be formed into a film, or the acrylic resin once isolated can be dissolved into any of said organic solvents, to prepare an acrylic resin solution to be formed into a film.

Furthermore, any of the aforesaid solvents can be mixed with one or more solvents selected from hydrocarbon-based organic solvents such as cyclohexane, benzene, toluene, xylene, styrene and cyclopentane, alcohol-based organic solvents such as methanol, ethanol, isopropyl alcohol, n-butanol and tert-butyl alcohol, ether-based organic solvents such as dimethyl ether, diethyl ether and butyl ether, ester-based organic solvents such as methyl acetate, ethyl acetate and n-butyl acetate, polyhydric alcohol-based organic solvents such as ethyl cellosolve, cellosolve acetate, tert-butyl cellosolve, etc. If any of these organic solvents is mixed, it can happen that the viscoelasticity or surface tension of the acrylic resin solution is changed to improve the surface properties or drying properties of the acrylic resin film or the releasability of the acrylic resin film from the support. However, it must be noted that if an organic solvent capable of only poorly solving the acrylic resin is mixed in a large amount, the stability of the acrylic resin solution declines to precipitate the acrylic resin.

The concentration of the acrylic resin solution is adequately adjusted in relation with the solvent used and the intended coating thickness of the acrylic resin. However, it is preferred that the total amount of the acrylic resin (A) and the acrylic elastic particles (B) is in a range from 5 to 40 parts by mass per 100 parts by mass of the acrylic resin solution. A more preferred range is 10 to 30 parts by mass. In this invention, the concentration of the acrylic resin solution refers to the concentration of the acrylic resin to the amount of the entire acrylic resin solution. It is not preferred that the concentration of the acrylic resin solution is less than 5 parts by mass, for such reasons that the viscosity is too low, that in the initial drying stage of the acrylic resin coating film, the convection of the organic solvent worsens the flatness of the acrylic resin film, and that it takes a long time to dry the organic solvent, lowering the productivity. On the contrary, it is not preferred either that the concentration of the acrylic resin solution is more than 40 parts by mass, since the viscosity is so high as to cause such problems that the handling is inconvenienced and that it is difficult to perform highly accurate filtration.

It is preferred to filter the acrylic resin solution for removing foreign matters so that film defects can be eliminated

and that a good haze value can be achieved. The filter used for such filtration can be, for example, a metallic screen or a filter made of a sintered metal, porous ceramic, glass or a polymer such as polypropylene resin or polyethylene resin, or a filter obtained by combining two or more of the aforesaid materials.

It is preferred that the filtration accuracy of the acrylic resin solution is 10 μm or less. More preferred is 5 μm or less, and further more preferred is 1 μm or less. It is preferred that the filtration accuracy of the acrylic resin solution is smaller, but it is not preferred that the filtration accuracy is too small, since clogging increases the filter exchange frequency, to lower the productivity. The adequate lower limit in the filtration accuracy of the acrylic resin solution is considered to be about 0.1 μm.

The method for coating a support with the acrylic resin solution can be adequately selected in relation with the viscoelasticity of the acrylic resin solution, the coating thickness of the acrylic resin film, the substrate used, the organic solvent used, etc. Examples of the usable coater include a regular rotation roll coater, reverse roll coater, gravure coater, knife coater, blade coater, rod coater, air doctor coater, curtain coater, fountain coater, kiss coater, screen coater, comma coater, slit die coater, etc.

The support to be coated with the acrylic resin solution can be a polymer film, drum, endless belt, etc. However, it is preferred to use a polymer film as the support, since the dried acrylic resin film can be well released from the support. The polymer film used as the support is not especially limited if it is resistant against the organic solvent used in the acrylic resin solution. Examples of the polymer film include a polyethylene terephthalate film, polyethylene naphthalate film, polypropylene film, polyethylene film, polyphenylene sulfide film, aramid film, polyimide film, etc. Among them, a polyethylene terephthalate film is preferred, since it is excellent in the balance among stiffness, thickness irregularity, freedom from defects, cost, etc.

The acrylic resin solution is applied onto the support, dried and released from the support, to obtain an acrylic resin film. For example, a wet process in which the solution is solidified using a solidifying liquid before the drying step can also be preferably used.

In the case where a polymer film is used as the support, it is preferred that the film thickness is 50 to 200 μm. A more preferred range is 100 to 150 μm. If the film thickness of the support is less than 50 μm, the film has low stiffness, and is likely to be wrinkled in the step of coating or drying, being likely to cause such a problem that the flatness of the acrylic resin film is degraded. Furthermore, it is not preferred either that the film thickness of the support is more than 200 μm, for such problems that it is uneconomical and that the acrylic resin film is less likely to conduct heat.

It is preferred that the step of drying the acrylic resin film applied to the support consists of at least three or more stages including initial drying, intermediate drying and final drying.

As the drying conditions for the acrylic resin film applied to the support, adequate conditions should be set in relation with the drying method, the organic solvent used, the viscoelasticity of the acrylic resin solution, the glass transition temperature of the acrylic resin, etc. However, it is preferred that the initial drying temperature is lower than the boiling point of the organic solvent used, since otherwise the acrylic resin film is liable to have the defects caused by bubbling. If the initial drying temperature is too low, it takes a long time for drying the acrylic resin film, to lower the productivity. So, the lower limit is considered to be about 0°C.

The drying stages of the drying step can be further increased beyond the three stages of initial drying, intermediate drying and final drying. In this case, it is preferred that the drying temperature is raised stepwise or continuously in view of the inhibition of bubbling. It is preferred that the drying time of each drying stage is about 1 to about 120 minutes.

The method for drying the acrylic resin film should be adequately selected in relation with the organic solvent used, the viscoelasticity of the acrylic resin solution, the glass transition temperature of the acrylic resin, the thickness of the acrylic resin film, etc. The drying method can be selected from hot air blowing, drum drying, infrared drying, microwave drying (induction heating), electromagnetic induction heating, ultraviolet drying, electron beam drying, etc.

The acrylic resin film may be dried completely on the support or can also be separated from the support during drying and then dried again. In the case where the acrylic resin film separated from the support is dried, it is preferred to hold the film ends for the purpose of preventing the degradation of the flatness due to drying shrinkage.

The acrylic resin film of this invention can be a mono-layer film or a multilayered film. A multilayered film can be produced, for example, by a method of forming another layer on an already formed layer or a method of laminating in a die or feed block.

In the case where an inflation method or T-die method is used for production, for example, a melt extruder with a single or double extrusion screw can be used. A double-screw kneading extruder with L/D of 25 to 120 is preferred, since coloration can be prevented. A preferred melt extrusion temperature for producing the film of this invention is 150 to 350°C. A more preferred range is 200 to 300°C. It is preferred that the melt shear rate is 1000 $S^{-1}$ to 5000 $S^{-1}$. Furthermore, in the case where a melt extruder is used for melt kneading, in view of inhibition of coloration, it is preferred to perform melt kneading under reduced pressure using a vent or to perform melt kneading in a nitrogen stream. The casting process is also preferred. In the casting process, a molten resin is metered by a gear pump and discharged from a T die, being brought into contact with a cooling medium such as a cooled drum by a publicly known contact means such as an electrostatic application method, air chamber method, air knife method or press roll method, for being quickly

cooled and solidified to room temperature, to obtain a cast film.

To obtain an acrylic resin film with a folding endurance value (times) of 20 or more, it is preferred to biaxially stretch the cast film obtained as above.

The biaxial stretching method is not especially limited, and such a method as sequential biaxial stretching method or simultaneous biaxial stretching method can be used.

In the case where a simultaneous biaxial stretching method is used for stretching, it is preferred to use a tenter driven by a linear motor (JP63-12772B, etc.) for simultaneously biaxially stretching, but the method is not especially limited. For driving by use of film holding clips, a chain drive method, screw method, pantograph method, etc. can also be used. It is preferred that the temperature of simultaneous biaxial stretching is in a temperature range from the glass transition temperature Tg of the acrylic resin to (the glass transition temperature Tg + 50°C). It is not preferred that the stretching temperature greatly deviates from this range for such reasons that uniform stretching cannot be achieved, that the thickness irregularity occurs and that the film is broken. The stretching ratios in the machine direction and the transverse direction are only required to be 1.1 to 5 times respectively. For enhancing the folding endurance value (times), it is especially preferred that the stretching ratios are 1.1 to 2.5 times. The stretching speed is not especially limited, but it is preferred that the speed is 100 to 50000%/min.

Furthermore, in the case where sequential biaxial stretching is used for stretching, the obtained non-oriented film is heated in contact with the rolls heated in a temperature range from (the glass transition temperature Tg - 30°C) of the acrylic resin to (the glass transition temperature Tg + 50°C), stretched in the machine direction to 1.1 to 2.5 times, cooled once, caught by tenter clips at the edges, and stretched in the transverse direction in a temperature range from (the glass transition temperature Tg + 5°C) of the acrylic resin to (the glass transition temperature Tg + 50°C) to 1.1 to 2.5 times, to obtain a biaxially oriented acrylic resin film.

In the case where sequential biaxial stretching is used, it is preferred to stick a cover film to at least one surface of the film for the purpose of decreasing the flaws caused by the contact between the rolls and the film, during stretching. The cover film can be a publicly known resin film. Particular examples of the cover film include a polyolefin film, polyester film, etc. Especially preferred are a polypropylene film and/or a polyethylene naphthalate film.

Next, to decrease the heat shrinkage rate and to ensure flatness, heat-treatment is performed as required. In order to obtain a low heat shrinkage rate as an effect of this invention, it is suitable to perform the heat treatment with the length kept constant, or with slight stretching, or in a loose state in a temperature range from (the glass transition temperature Tg) to (the glass transition temperature + 130°C) for 0.5 to 60 seconds. It is most suitable to perform the heat treatment in a temperature range from (the glass transition temperature Tg + 40°C) to (the glass transition temperature + 80°C) for 0.5 to 10 seconds. If the temperature is lower than the aforesaid range, the heat shrinkage rate may become large, and if it is higher than the aforesaid range, the haze value may become high while the impact resistance may decline.

The film biaxially oriented and heat-treated by the respective methods is gradually cooled to room temperature and wound by a winder. It is preferred to cool in two or more stages gradually to room temperature. In this case, it is effective to perform relaxation treatment by about 0.5 to about 10% in the machine direction and the transverse direction, since the heat shrinkage rate can be decreased. As for the cooling temperatures, it is preferred that the temperature for the first stage is in a range from (the heat treatment temperature - 20°C) to (the heat treatment temperature - 80°C), and the temperature for the second stage is in a range from (the cooling temperature of the first stage - 30°C) to (the cooling temperature of the first stage - 40°C), though the temperatures are not limited to these ranges.

In a preformed mode of this invention, a hard coat layer is formed at least on one surface of the acrylic resin film of this invention, and a reflection preventive film is further formed at least on one surface of the film. The method for forming the hard coat layer is not especially limited, and a publicly known method can be used. For example, a method of using a polyfunctional acrylate can be used. Examples of the polyfunctional acrylate include diacrylates such as 1,6-hexanediol diacrylate, 1,4-butanediol diacrylate, ethylene glycol diacrylate, diethylene glycol diacrylate, tetraethylene glycol diacrylate, tripropylene glycol diacrylate, neopentyl glycol diacrylate, 1,4-butanediol dimethacrylate, poly (butanediol) diacrylate, tetraethylene glycol dimethacrylate, 1,3-butylene glycol diacrylate, triethylene glycol diacrylate, triisopropylene glycol diacrylate, polyethylene glycol diacrylate and bisphenol A dimethacrylate; triacrylates such as trimethylolpropane triacrylate, trimethylolpropane trimethacrylate, pentaerythritol monohydroxy triacrylate and trimethylolpropane triethoxy triacrylate; tetraacrylates such as pentaerythritol tetraacrylate and di-trimethylolpropane tetraacrylate; and pentaacrylates such as pentaerythritol (monohydroxy) pentaacrylate. Furthermore, the reflection preventive film is not especially limited either, and a publicly known method can be used. The reflection preventive film can be of a dry process using an inorganic compound or of a wet process using an organic compound. Either a mono-layer film using one low refractive index layer or a multilayered film using a high refractive index layer, a low refractive index layer and a medium refractive index layer arbitrarily can be preferably used.

The film obtained as described above can be used for various applications such as electric and electronic parts, optical filters, motor vehicle parts, mechanical mechanism parts, housings and parts of OA devices and household electric appliances, and general miscellaneous goods, since it is excellent in transparency, heat resistance, light resistance and toughness.

In the above, the optical filters are members of display apparatuses, especially members used in flat panel displays such as liquid crystal displays, plasma displays, field emission displays and electroluminescence displays. Examples of them include plastic substrates, lenses, polarizing plates, polarizing plate protective films, ultraviolet light absorbing films, infrared light absorbing films, electromagnetic wave shielding films, prism sheets, prism sheet substrates, Fresnel lenses, optical disc substrates, optical disc substrate protective films, light guide plates, retardation films, light diffusion films, visibility angle expanding films, reflection films, reflection preventive films, glare-proof films, brightness improving films, prism sheets and electrically conductive films for touch panels.

Particular applications of the aforesaid molded articles include various covers, various terminal boards, printed wiring boards, speakers, optical apparatuses typified by microscopes, binoculars, cameras and clocks. Furthermore, since the film of this invention is excellent in transparency and heat resistance, it is useful as image apparatus related parts such as finders, filters, prisms and Fresnel lenses of cameras, VTRs and projection TVs, optical recording and communication related parts such as substrate protective films of various optical discs (VDs , CDs, DVDs, MDs, LDs, etc.), optical switches and optical connectors, information apparatus related parts such as light guide plates, Fresnel lenses, polarizing plates, polarizing plate protective films, retardation films, light diffraction films, visibility angle expanding films, reflection films, reflection preventive films, glare-proof films, brightness improving films, prism sheets, electrically conductive films for touch panels and covers of liquid crystal displays, flat panel displays and plasma displays. The acrylic resin film of this invention is especially useful as a polarizing plate protective film.

[Examples]

[Methods for measuring physical properties]

The constitution and effects of this invention will be described below more particularly in reference to examples, though this invention is not limited thereto or thereby. Before describing the respective examples, the methods for measuring the respective physical properties employed in the examples are described below.

(1) Proportions of respective components

An acrylic resin film was dissolved into acetone, and the solution was centrifuged at 9000 rpm for 30 minutes, for separation into an acetone-soluble component and an acetone-insoluble component. The acetone-soluble component was dried under reduced pressure at 60°C for 5 hours, and the units of the respective components were determined to identify the proportions of the respective components of the acrylic resin.

The units of the respective components were determined by proton nuclear magnetic resonance ($^1$H-NMR) spectroscopy. According to the $^1$H-NMR spectroscopy, for example, in the case of a copolymer consisting of glutaric anhydride units, methacrylic acid and methyl methacrylate, the peaks of the spectrum in deuterated dimethyl sulfoxide solvent can be decided to be attributable as follows : the peak at 0.5 to 1. 5 ppm, to the hydrogen of $\alpha$-methyl groups of methacrylic acid, methyl methacrylate and glutaric anhydride compound; the peak at 1.6 to 2.1 ppm, to the hydrogen of methylene groups in the main chain of the polymer; the peak at 3.5 ppm, to the hydrogen of methyl methacrylate as a carboxylate ($-COOCH_3$); and the peak at 12.4 ppm to the hydrogen of methacrylic acid as a carboxylic acid. In this way, the chemical composition of the copolymer can be decided from the integral ratio in the spectrum. In the case of a copolymer containing styrene as a further other component in addition to the above, the peak at 6.5 to 7.5 ppm is attributable to the hydrogen of the aromatic ring of styrene, and similarly the chemical composition of the copolymer can be decided from the ratio in the spectrum.

Meanwhile, in addition to the $^1$H-NMR spectroscopy, the units of the respective components can also be determined by infrared spectroscopy. In the infrared spectroscopy, the absorption at 1800 $cm^{-1}$ and 1760 $cm^{-1}$ is characteristic of glutaric anhydride units, and they can be distinguished from the units derived from vinylcarboxylic acid and the units derived from alkyl vinylcarboxylates.

The weight average particle size of a gum polymer can be measured by the sodium alginate method described in "Rubber Age, Vol. 88, pages 484-490 (1960), by E. Schmidt, P.H. Biddison". This method uses the principle that the particle size of polybutadiene creamed depends on the concentration of sodium alginate, and the weight average particle size of the gum polymer can be measured by a method of obtaining the particle size at a cumulative weight percentage of 50% from the rate of creamed weight and the cumulative weight percentage of sodium alginate concentration.

(2) Folding endurance value (times)

This is measured according to JIS P 8115-1994. Specimens had a width of 5 $\pm$ 0.03 mm and a length of 110 $\pm$ 5 mm, and were loaded with 2.5 $kgf/mm^2$ sectional area. The measurement was performed three times, and the

measured values were averaged.

(3) Haze value and total light transmittance

A direct reading haze meter produced by Toyo Seiki Seisaku-sho, Ltd. was used to measure the haze value (%) at 23°C and the total light transmittance (%). The measurement was performed three times, and the measured values were averaged.

The total light transmittance and the haze value were measured according to JIS K 7361 and JIS K 7136 respectively.

(4) Elongation at breakage

Film strength-elongation automatic measuring instrument, "Tensilon AMF/RTA-100" produced by Orientec Co., Ltd. was used to measure under the following conditions:

Sample size: 10 mm wide, 150 mm long
Inter-chuck distance: 50 mm
Stress rate: 300 mm/min
Test environment: 23°C, 65% RH, atmospheric pressure

From the tangential line at the rise portion of the obtained load-elongation curve, the Young's modulus in tension was obtained. Furthermore, the difference obtained by subtracting the inter-chuck distance from the length of the film at which the film was broken was divided by the inter-chuck distance, and the quotient was multiplied by 100 to obtain the elongation at breakage. The measurement was performed five times, and the measured values were averaged.

(5) Heat shrinkage rate

Two lines were drawn on a film, to have a width of 10 mm and a test length of about 200 mm, and the distance between the two lines was accurately measured as L0. The sample was allowed to stand in a 100°C oven for 30 minutes under no load, and the distance between the two lines was measured again as L1. The heat shrinkage rate was obtained from the following formula. The measurement was performed only once.

$$\text{Heat shrinkage rate (\%)} = \{(L0 - L1)/L0\} \times 100$$

(6) Retardation at a wavelength of 550 nm

The retardation at a wavelength of 550 nm was obtained as described below. An automatic birefringence meter (KOBRA-21ADH) produced by Oji Scientific Instruments was used to measure the retardation to light with a wavelength of 480.4 nm, the retardation to light with a wavelength of 548.3 nm, the retardation to light with a wavelength of 628.2 nm and the retardation to light with a wavelength of 752.7 nm in the wavelength dispersion measurement mode, and the respective coefficients a through d of Cauchy's wavelength dispersion formula $\{R(\lambda) = a + b/\lambda 2 + c/\lambda 4 + d/\lambda 6\}$ were obtained from the retardation (R) at the respective wavelengths and measuring wavelength ($\lambda$). Then, wavelength 550 nm ($\lambda = 550$) was substituted into the Cauchy's wavelength dispersion formula, to obtain the retardation. The measurement was performed only once.

(7) Retardation Rth in thickness direction

An automatic birefringence meter (KOBRA-21ADH) produced by Oji Scientific Instruments was used to measure nx and ny ($nx \geq ny$) respectively as the refractive indexes of the acrylic resin film to light with a wavelength of 590 nm in the orthogonal axis directions in the plane of the film, and nz as the refractive index of the acrylic resin film to light with a wavelength of 590 nm in the thickness direction of the film, and with the thickness of the acrylic resin film as d (nm), the retardation Rth in the thickness direction was obtained from the following formula. The measurement was performed only once.

$$\text{Retardation in thickness direction, Rth (nm)} = d \times \{(nx + ny)/2 - nz\}$$

(8) Light transmittance of 380 nm

The following instrument was used to obtain the transmittance of the light with each wavelength. The measurement was performed only once.

$$\text{Transmittance (\%)} = T1/T0 \times 100$$

where T1 is the intensity of the light transmitted through the sample, and T0 is the intensity of the light transmitted through air by the same distance except that it was not transmitted through the sample.
Instrument: UV measuring instrument U-3410 (produce by Hitachi Keisoku)
Wavelength range: 300 nm to 800 nm
Measuring speed: 120 nm/min
Measuring mode: Transmission

(9) Coefficient of photoelasticity ($10^{-12}$/Pa)

A 1 cm wide and 7 cm long sample was cut out. The sample was chucked by 1 cm each at the top and bottom using Transducer U3C1-5K produced by Shimadzu Corp, and a tension (F) of 1 kg/mm$^2$ ($9.81 \times 10^6$ Pa) was applied in the longitudinal direction. In this state, polarizing microscope 5892 produced by Nikon Corp. was used to measure Re (nm). The light source used was sodium D line (589 nm) . These values were substituted into " Coefficient of photoelasticity = Re/(d $\times$ F), to calculate the coefficient of photoelasticity. The measurement was performed only once.

(10) Remaining volatile content

An equipment with a data processing personal computer combined with a thermogravimetric analyzer (TGA-50H) and a thermal analyzer (TA-50) produced by Shimadzu Corp was used for measurement. About 7 mg of an acrylic resin film separated from the support was set in a furnace, and heated from room temperature to 220°C at a heating rate of 10°C/min with nitrogen atmosphere kept in the furnace. In reference to the obtained thermogravimetric curve, the remaining volatile content of the acrylic resin film was obtained from the following formula. The measurement was performed twice for each sample, and the average value was employed as the remaining volatile content.

$$\text{Remaining volatile content (parts by mass)} = \{(\text{Mass at } 35^\circ\text{C} - \text{Mass at } 200^\circ\text{C})/(\text{Mass at } 35^\circ\text{C})\} \times 100$$

(11) Thermal deformation temperature (°C)

Thermomechanical analysis (TMA) was used to heat a test sample, to plot the amount of deformation for each test temperature, and the temperature at which the amount of deformation was 2% or more was identified as the thermal deformation temperature. Meanwhile, for TMA, a thermal analysis station (MTS-9000) produced by Shinku Riko K.K. was used, and a test sample with a width of 4 mm and a test length of 15 mm was loaded with a tensile load of 15 kgf/mm$^2$ sectional area of the test sample using a sample measuring module (TM-9400), to measure the thermal deformation temperature. The measurement was performed only once.

(12) Refractive index and refractive index difference

Acetone was added to the acrylic resin film of this invention, and the solution was refluxed for 4 hours and centrifuged at 9,000 rpm for 30 minutes, for separation into an acetone soluble component {component (A)} and an insoluble component {component (B)}. They were dried under reduced pressure at 60°C for 5 hours, and the respective solids obtained were press-molded at 250°C into 0.1 mm thick films. An Abbe's refractometer (DR-M2 produced by

Atago Co., Ltd.) was used to measure their refractive indexes at 23°C at a wavelength of 550 nm. For the difference between the refractive indexes of the components (A) and (B), their absolute values were used. The measurement was performed only once.

(13) Weight average molecular weight (absolute molecular weight)

The weight average molecular weight (absolute molecular weight) of the obtained thermoplastic polymer was measured using a gel permeation chromatograph (pump Model 515 produced by Waters, column TSK-gel-GMHXL produced by Tosoh Corp.) equipped with Model DAWN-DSP multi-angle light scattering photometer (produced by Wyatt Technology) with dimethylformamide as the solvent.

(14) Glass transition temperature (Tg)

A differential scanning calorimeter (Model DSC-7 produced by Perkin Elmer) was used to measure the glass transition temperature in nitrogen atmosphere at a heating rate of 20°C/min. The measurement was performed only once. Meanwhile, as the glass transition temperature (Tg), the glass transition temperature (Tmg) at an intermediate point of JIS K 7121-1987 was employed.

(15) Charpy impact strength ($kJ/m^2$)

The Charpy impact strength was measured according to JIS K 7111. Unnotched 10 mm wide and 50 mm long specimens were used. The measurement was performed ten times, and the measured values were averaged.

(16) Blanking test

A 12.1-inch rectangular sample was obtained by blanking using a Thomson blanking machine to ensure that the angle of the absorbing axis of a polarizer with its sides became 45°.
A cracked sample was rejected (x), and a non-cracked sample was accepted (o).

Reference Example (1) Acrylic resin (A1)

A solution with 0.05 part of methyl methacrylate/acrylamide copolymer-based suspending agent (this was prepared by the following method: 20 parts by mass of methyl methacrylate, 80 parts by mass of acrylamide, 0.3 part by mass of potassium persulfate and 1500 parts by mass of ion exchange water were supplied into a reactor, and while the atmosphere in the reactor was substituted by nitrogen gas, the mixture in it was kept at 70°C; the reaction was continued till the monomers were perfectly converted into a polymer, to obtain an aqueous solution of methyl acrylate/acrylamide copolymer; the obtained aqueous solution was used as the suspending agent) dissolved in 165 parts of ion exchange water was supplied into a stainless steel autoclave with a capacity of 5 liters and having baffles and Faudler stirring blades, and the solution was stirred at 400 rpm, while the atmosphere in the autoclave was replaced by nitrogen gas. Then, the following mixture was added while the reaction mixture was stirred, and the obtained mixture was heated to 70°C. The point of time when the internal temperature reached 70°C was identified as the polymerization initiation, and the polymerization was continued for 180 minutes for completion. Then, according to an ordinary method, the reaction system was cooled, and the polymer was separated, washed and dried to obtain a copolymer (a-1) formed as beads. The copolymer (a-1) had a polymerization rate of 98% and a weight average molecular weight of 90,000.
Methacrylic acid: 27 parts by mass
Methyl methacrylate: 73 parts by mass
t-dodecyl mercaptan: 1.5 parts by mass
2,2'-azobisisobutyronitrile: 0.4 part by mass
An additive ($NaOCH_3$) was added to the copolymer, and a two-screw extruder (TEX-30 produced by the Japan Steel Works, Ltd. , L/D = 44.5) was used to perform an intermolecular cyclization reaction at a screw speed of 100 rpm with the raw material supplied at a rate of 5 kg/h at a cylinder temperature of 290°C, while nitrogen was purged from the hopper portion at a rate of 10 liters/min, to obtain an acrylic resin (A1) formed as pellets. One hundred parts by mass of the acrylic resin (A1) contained 31 parts by mass of glutaric anhydride units.

Reference Example (2) Acrylic resin (A2)

An acrylic resin (A2) was obtained as described for Reference Example 1, except that methyl methacrylate/methacrylic acid copolymer (MMA/MAA = 72/28) obtained by suspension polymerization was used as the acrylic resin.

The acrylic resin contained 23 mol% of glutaric anhydride units.

Reference Example (3) Acrylic elastic particles (B1)

The core-shell polymer obtained as described below was used.

A glass container (capacity 5 liters) with a condenser was charged with 120 parts by mass of deionized water, 0.5 part by mass of potassium carbonate, 0.5 part by mass of dioctyl sulfosuccinate and 0.005 part by mass of potassium persulfate, and the mixture was stirred in nitrogen atmosphere. Then, 53 parts by mass of butyl acrylate, 17 parts by mass of styrene and 1 part by mass of allyl methacrylate (crosslinking agent) were added. The mixture was made to react at 70°C for 30 minutes, to obtain a polymer to be used as the core layer. Subsequently a mixture consisting of 21 parts by mass of methyl methacrylate, 9 parts by mass of methacrylic acid and 0.005 part by mass of potassium persulfate was added continuously, taking 90 minutes, and the obtained mixture was further kept for 90 minutes for polymerization to form a shell layer. The polymer latex was solidified by sulfuric acid and neutralized by caustic soda. The neutralization product was washed, filtered and dried, to obtain acrylic elastic particles (B) with a two-layer structure. The average particle size of the polymer particles was measured using an electron microscope and found to be 155 nm.

The difference between the obtained acrylic elastic particles (B1) and the acrylic resin (A1) in refractive index was 0.002.

Working Example 1

Seventy five parts by mass of the acrylic resin (A1) obtained in Reference Example (1) and 25 parts by mass the acrylic elastic particles (B1) obtained in Reference Example (3) were mixed, and the mixture was kneaded using a two-screw extruder (TEX 30 produced by the Japan Steel Works, Ltd., L/D = 44.5) at a screw speed of 150 rpm at a cylinder temperature of 280°C, to obtain an acrylic resin formed as pellets.

Then, the pellets dried at 100°C for 3 hours were extruded through a T die (set at a temperature of 250°C) using a vented single-screw extruder of 65 mmϕ, and both the surfaces of the extruded film were brought into perfect contact with polishing rolls, for being cooled, to obtain a cast acrylic resin film. The acrylic resin film was stretched to 1.5 times in the longitudinal direction and to 1.5 times in the transverse direction at a preheating temperature of 130°C and at a stretching temperature of 145°C using a linear motor-driven simultaneous biaxial tenter, to obtain an oriented film. The obtained film was treated at 155°C for 3% relaxation treatment in the machine direction and the transverse direction respectively, while it was heat-treated for 5 seconds, to obtain a 100 μm thick acrylic resin film.

The acrylic resin film obtained as described above was excellent in all of heat resistance, transparency and toughness, and also excellent in processing properties. The film had the following properties.

Folding endurance value (times): 35
Thermal deformation temperature (°C) : 135
Elongation at breakage (%): 38
Glass transition temperature (Tg): 130
Total light transmittance (%): 92
Haze (%): 0.8
Impact strength (kJ/$m^2$): 300
Heat shrinkage rates (%) (MD/TD): 1.5/1.0
Blanking test: $O_0$

Working Examples 2 to 5

Acrylic resins formed as pellets were obtained by using the acrylic resin (A2) obtained in Reference Example 2 as the acrylic resin and using the acrylic elastic particles shown in Table 1 by the amounts shown in Table 1, and using a double-screw extruder (TEX30 produced by the Japan Steel Works, Ltd., L/D = 44.5) at a screw speed of 150 rpm at a cylinder temperature of 280°C. The pellets were dried by a vacuum dryer at 80°C for 8 hours, to eliminate water.

Fifty grams of the obtained acrylic resin and 150 g of 2-butanone were placed in a 300 ml separable flask equipped with a stirrer, and were stirred by double helical ribbon stirring blades for 24 hours. The obtained solution was filtered using a 1 μm-removing glass filter, to obtain an acrylic resin solution.

The acrylic resin solution was partially taken on a glass sheet having a 100 μm thick polyethylene terephthalate film fixed on it, and a bar coater was used to form a uniform film. It was heated at 50°C for 10 minutes, to obtain a self-sustaining film. The obtained film was separated from the polyethylene terephthalate film and fixed in a metallic frame, being heated further at 100°C for 10 minutes, at 120°C for 20 minutes, at 140°C for 20 minutes and at 170°C for 40 minutes, to obtain a film. The acrylic elastic particles used, their amounts and the physical properties of the films are collectively shown in Tables 1 and 2.

The UV absorber used was Adekastab LA36 represented by said general formula (3) and produced by Asahi Denka Kogyo K.K.

Comparative Example 1

A cast 100 μm thick acrylic resin film was obtained by adjusting the extruded amount as described for Working Example 1, except that stretching and heat treatment were not performed.
The acrylic resin film obtained as described above was small in the folding endurance value (times) and was cracked when it was blanked. Furthermore, since the haze value was high, the film was not suitable for an optical filter. The film had the following properties.
Folding endurance value (times): 14
Thermal deformation temperature (°C): 130
Elongation at breakage (%): 20
Glass transition temperature (Tg): 125
Total light transmittance (%): 92
Haze (%): 1.2
Impact strength (kJ/$m^2$): 100
Heat shrinkage rates (%) (MD/TD): 0.9/0.5 Blanking test: $X_0$

Comparative Example 2

Eighty parts by mass of an acrylic resin (A3) consisting of 30 parts by mass of polymethyl methacrylate [weight average molecular weight 120, 000], 50 parts by mass of butyl acrylate/methyl methacrylate copolymer (consisting of 20 parts by mass of butyl acrylate units and 80 parts by mass of methyl methacrylate units, weight average molecular weight 300,000) and 20 parts by mass of an acrylic polymer (B2) of spherical particles respectively with a three-layer structure including an elastic rubber layer [the innermost layer ... methyl methacrylate copolymer, an intermediate layer ... a soft elastic rubber mainly composed of butyl acrylate, the outermost layer ... polymethyl methacrylate, average particle size 300 nm] (see Example 3 of JP55-27576B) were melt-kneaded to obtain an acrylic resin composition, and the composition was pelletized using a double-screw extruder. The acrylic resin pellets were extruded through a T die (set at a temperature of 250°C) using a single-screw extruder of 65 mmϕ, and both the surfaces of the extruded film were brought into perfect contact with polishing rolls, for being cooled, to obtain an acrylic resin film. The acrylic resin film was monoaxially stretched to 3 times in the transverse direction at a stretching temperature of 100°C using a tenter at a stretching rate of 8.6 m/min, to obtain an acrylic resin film.
The acrylic resin film obtained as described above was small in the folding endurance value (times) and was cracked when blanked. Furthermore, it was low in thermal deformation temperature and poor in thermal dimensional stability. It was also high in haze value, not being suitable for an optical filter. The film had the following properties.
Folding endurance value (times): 10
Thermal deformation temperature (°C): 85
Elongation at breakage (%): 25
Glass transition temperature (Tg): 90
Total light transmittance (%): 90
Haze (%): 5
Impact strength (kJ/$m^2$): 120
Heat shrinkage rates (%) (MD/TD): 20/30 Blanking test: $X_0$

Comparative Example 3

An acrylic resin formed as pellets was obtained by using the acrylic resin (A2) obtained in Reference Example 2 as the acrylic resin without using the acrylic elastic particles, and using a double-screw extruder (TEX30 produced by the Japan Steel Works, Ltd., L/D = 44.5) at a screw speed of 150 rpm at a cylinder temperature of 280°C, for kneading. The pellets were dried using a vacuum dryer at 80°C for 8 hours, to eliminate water.
Fifty grams of the obtained acrylic resin and 150 g of 2-butanone were placed in a 300 ml separable flask equipped with a stirrer, and stirred by double helical ribbon stirring blades for 24 hours. The obtained solution was filtered by a 1 μm-removing glass filter, to obtain an acrylic resin solution.
The acrylic resin solution was partially placed on a glass sheet having a 100 μm thick polyethylene terephthalate film fixed on it, and a bar coater was used to form a uniform film. It was heated at 50°C for 10 minutes, to obtain a self-sustaining film. The obtained film was separated from the polyethylene terephthalate film and fixed in a metallic frame, being further heated at 100°C for 10 minutes, at 120°C for 20 minutes, at 140°C for 20 minutes and at 170°C for 40

minutes, to obtain a film. The resin used and the physical properties of the film are collectively shown in Tables 1 and 2.

[Table 1]

Table 1

| | Acrylic resin | Methyl methacrylate units | Glutaric anhydride units | Acrylic acid units | Butyl acrylate units | Acrylic elastic particles | Core composition (butyl acrylate /styrene) | Core/shell | Particle size | Added amount of acrylic elastic particles | Ultraviolet light absorber | | Film forming method | Stretching | Film thickness |
|---|---|---|---|---|---|---|---|---|---|---|---|---|---|---|---|
| | | Parts by mass | Parts by mass | Parts by mass | Parts by mass | | mol%/mol% | Parts by mass/parts by mass | nm | Parts by mass | Product | Parts by mass | | | μm |
| Example 1 | A1 | 59 | 41 | 0 | 0 | B1 | 75/25 | 70/30 | 155 | 25 | - | - | Melt | Performed | 100 |
| Example 2 | A2 | 66 | 32 | 2 | 0 | B7 | 75/25 | 70/30 | 155 | 20 | - | - | Solution | Not performed | 41 |
| Example 3 | A2 | 66 | 32 | 2 | 0 | B7 | 75/25 | 70/30 | 155 | 10 | - | - | Solution | Not performed | 48 |
| Example 4 | A2 | 66 | 32 | 2 | 0 | B7 | 75/25 | 70/30 | 155 | 20 | LA36 | 1 | Solution | Not performed | 50 |
| Example 5 | A2 | 66 | 32 | 2 | 0 | B7 | 75/25 | 70/30 | 155 | 20 | LA36 | 2 | Solution | Not performed | 50 |
| Comp. Example 1 | A1 | 59 | 41 | 0 | 0 | B1 | 75/25 | 70/30 | 155 | 25 | - | - | Melt | Not performed | 100 |
| Comp. Example 2 | A3 | 90 | 0 | 0 | 10 | B2 (3-layer structure) | 79/19 (intermediate layer) | 37/48/15 | 300 | 20 | - | - | Melt | Performed | 40 |
| Comp. Example 3 | A2 | 66 | 32 | 2 | 0 | Nil | - | - | - | 0 | - | - | Solution | Not performed | 50 |

[Table 2]

Table 2

| | Total light transmittance | Haze | Folding endurance value | Elongation at breakage | Heat shrinkage rates (MD/TD) | Retardation | Retardation in thickness direction | Coefficient of photo elasticity | Charpy impact strength | Light transmittance @380nm | Thermal deformation temperature | Volatile content | Blanking test |
|---|---|---|---|---|---|---|---|---|---|---|---|---|---|
| | % | % | Times | % | % | nm | nm | $10^{-12}$/Pa | kJ/$m^2$ | % | °C | % | |
| Example 1 | 92 | 0.8 | 35 | 38 | 1.5/1.0 | 0.2 | 1.5 | 0.7 | 300 | 91 | 135 | 1 or less | ○ |
| Example 2 | 92 | 1.1 | 600 | 13 | 0.2/0.2 | 0.1 | 0.4 | 1.2 | 52 | 92 | 125 | 2 or less | ○ |
| Example 3 | 93 | 1.0 | 20 | 11 | 0.2/0.2 | 0.3 | -0.2 | 0.6 | 62 | 92 | 130 | 3 or less | ○ |
| Example 4 | 93 | 0.7 | 800 | 10 | 0.2/0.2 | 0.2 | 0.3 | 0.3 | 89 | 6 | 125 | 4 or less | ○ |
| Example 5 | 93 | 0.8 | 500 | 10 | 0.0/0.0 | 0.0 | 1.2 | 0.7 | 73 | 1 | 125 | 5 or less | ○ |
| Comp. Example 1 | 92 | 1.2 | 14 | 20 | 0.9/0.5 | 1.2 | 0.0 | 1.6 | 100 | 88 | 130 | 6 or less | × |
| Comp. Example 2 | 90 | 5.0 | 10 | 25 | 20/30 | 15 | 12.0 | 3.5 | 120 | 88 | 85 | 7 or less | × |
| Comp. Example 3 | 92 | 1.1 | 3 | 2 | 0.4/0.4 | 0.3 | 1.0 | 0.2 | 37 | 92 | 135 | 8 or less | × |

[Industrial applicability]

The film obtained as described above can be used for various applications such as electric and electronic parts, optical filters, motor vehicle parts, mechanical mechanism parts, housings and parts of OA devices and household electric appliances, and general miscellaneous goods, since it is excellent in transparency, heat resistance, light resistance and toughness.

Particular applications of the aforesaid molded articles include various covers, various terminal boards, printed wiring boards, speakers, optical apparatuses typified by microscopes, binoculars, cameras and clocks. Furthermore, since the film of this invention is excellent in transparency and heat resistance, it is useful as image apparatus related parts such as finders, filters, prisms and Fresnel lenses of cameras, VTRs and projection TVs, optical recording and communication related parts such as substrate protective films of various optical discs (VDs, CDs, DVDs, MDs, LDs, etc.), optical switches and optical connectors, information apparatus related parts such as light guide plates, Fresnel lenses, polarizing plates, polarizing plate protective films, retardation films, light diffraction films, visibility angle expanding films, reflection films, reflection preventive films, glare-proof films, brightness improving films, prism sheets, electrically conductive films for touch panels and covers of liquid crystal displays, flat panel displays and plasma displays.

## Claims

1. An acrylic resin film made of a material mainly composed of a mixture consisting of 50 to 95 parts by mass of an acrylic resin (A) containing the glutaric anhydride units, each represented by the following structural formula (1), and 5 to 50 parts by mass of acrylic elastic particles (B), with the total amount of the acrylic resin (A) and the acrylic elastic particles (B) as 100 parts by mass, and satisfying the following (i) to (v):

   (i) The acrylic resin (A) consists of 50 to 90 parts by mass of methyl methacrylate units and 10 to 50 parts by mass of glutaric anhydride units with the amount of the entire acrylic resin (A) as 100 parts by mass.
   (ii) The total light transmittance is 91% or more.
   (iii) The haze value is 1.5% or less.
   (iv) The folding endurance value (times) is 20 or more.
   (v) The heat shrinkage rate in at least either the longitudinal direction or the transverse direction is less than 5% in a heat shrinkage test.

   [Chemical formula 1]

   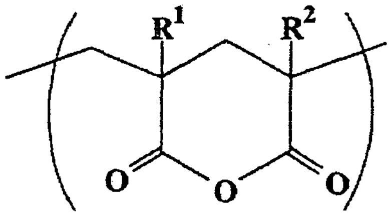

   ......(1)

   (where R1 and R2 denote, respectively independently, a hydrogen atom or alkyl group with 1 to 5 carbon atoms.)

2. An acrylic resin film, according to Claim 1, which has an elongation at breakage of 10% or more.

3. An acrylic resin film, according to Claim 1 or 2, wherein the retardation in the plane of the film to light with a wavelength of 590 nm is 10 nm or less.

4. An acrylic resin film, according to any one of Claims 1 through 3, wherein the retardation in the thickness direction of the film to light with a wavelength of 590 nm is 10 nm or less.

5. An acrylic resin film, according to any one of Claims 1 through 4, wherein the coefficient of photoelasticity to light with a wavelength of 550 nm is $-2 \times 10^{-12}$/Pa to $2 \times 10^{-12}$/Pa.

6. An acrylic resin film, according to any one of Claims 1 through 5, which contains 0.01 part by mass to 5 parts by

mass of an ultraviolet light absorber, with the total amount of the acrylic resin (A) and the acrylic elastic particles (B) as 100 parts by mass.

**7.** An acrylic resin film, according to any one of Claims 1 through 6, wherein the light transmittance of light of 380 nm is 10% or less.

**8.** An acrylic resin film, according to any one of Claims 1 through 7, wherein the particle size of the acrylic elastic particles (B) is 50 nm to 400 nm.

**9.** An acrylic resin film, according to any one of Claims 1 through 8, wherein each of the acrylic elastic particles (B) consists of an inner layer made of an elastic rubber containing alkyl acrylate units and/or an aromatic vinyl and an outer layer made of a hard polymer mainly composed of an acrylic resin containing glutaric anhydride units; and the difference between the acrylic elastic particles (B) and the acrylic resin (A) in refractive index is 0.01 or less.

**10.** An acrylic resin film, according to any one of Claims 1 through 9, which has a thermal deformation temperature of 110°C or higher.

**11.** An acrylic resin film, according to any one of Claims 1 through 10, wherein the remaining volatile content is 3 parts by mass or less per 100 parts by mass of the acrylic resin film.

**12.** An acrylic resin film, according to any one of Claims 1 through 11, which has a hard coat layer formed at least on one surface of the film, and further has a reflection preventive film formed at least on one surface of the film.

**13.** An optical filter comprising the acrylic resin film as set forth in any one of Claims 1 through 12.

**14.** A polarizing plate protective film, comprising the acrylic resin film as set forth in any one of Claims 1 through 12.

**15.** A production method comprising the step of producing the acrylic resin film as set forth in any one of Claims 1 through 12 using a solution casting method.

**16.** A method for producing an acrylic resin film, comprising the step of stretching a substantially unstretched acrylic resin film at a temperature in a range from the glass transition temperature (Tg) to {the glass transition temperature (Tg) + 50°C} to 1.1 to 5.0 times in the longitudinal direction and in the transverse direction.

# INTERNATIONAL SEARCH REPORT

International application No.
PCT/JP2005/007671

A. CLASSIFICATION OF SUBJECT MATTER
Int.Cl[7] C08L33/00, C08F8/48, C08J5/18

According to International Patent Classification (IPC) or to both national classification and IPC

B. FIELDS SEARCHED

Minimum documentation searched (classification system followed by classification symbols)
Int.Cl[7] C08L33/00, C08F8/48, C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP 60-067557 A (Mitsubishi Rayon Co., Ltd.),<br>17 April, 1985 (17.04.85),<br>Claims; examples<br>(Family: none) | 1-8,10,11,<br>15,16<br>12-14<br>9 |
| Y<br>A | JP 07-268036 A (Sumitomo Chemical Co., Ltd.),<br>17 October, 1995 (17.10.95),<br>Claims; Par. No. [0012]<br>(Family: none) | 12-14<br>1-11,15,16 |
| Y<br>A | JP 2004-002711 A (Toray Industries, Inc.),<br>08 January, 2004 (08.01.04),<br>Claims; Par. No. [0056]<br>& EP 1496067 A1 & WO 2003/080683 A1 | 12-14<br>1-11,15,16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 July, 2005 (06.07.05) | 26 July, 2005 (26.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.
PCT/JP2005/007671

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-178399 A (Mitsubishi Rayon Co., Ltd.), 27 June, 2000 (27.06.00), Full text (Family: none) | 1-16 |
| A | JP 60-184504 A (Mitsubishi Rayon Co., Ltd.), 20 September, 1985 (20.09.85), Full text (Family: none) | 1-16 |
| A | JP 05-295215 A (Sumitomo Chemical Co., Ltd.), 09 November, 1993 (09.11.93), Full text (Family: none) | 1-16 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004002711 A
- JP 7268036 A
- JP 60067557 A
- JP 2000178399 A
- JP 2000109575 A
- JP 63012772 B
- JP 55027576 B


### Non-patent literature cited in the description


- **E. SCHMIDT ; P.H. BIDDISON.** *Rubber Age,* 1960, vol. 88, 484-490